# EUROPEAN PATENT SPECIFICATION

(11) **EP 4 083 930 B1**
(45) Date of publication and mention of the grant of the patent: **29.07.2026**
(21) Application number: 21919923.9
(22) Date of filing: 22.12.2021
(51) Int. Cl.: G06T 19/00, B60K 35/28, G06Q 90/00, G06Q 50/40, G06Q 30/0251, B60K 35/23, B60K 35/00, G01C 21/36, G06Q 30/02, G06T 19/20, G06F 3/01, G06F 3/0484, G06F 3/0481, B60K 35/21, B60K 35/10, B60K 35/22, B60K 35/25, B60K 35/26

(54) **DIGITAL SIGNAGE PLATFORM PROVIDING DEVICE, OPERATING METHOD THEREOF, AND SYSTEM INCLUDING DIGITAL SIGNAGE PLATFORM PROVIDING DEVICE**
VORRICHTUNG ZUR BEREITSTELLUNG EINER DIGITALEN HERVORHEBUNGSPLATTFORM, ZUGEHÖRIGES BETRIEBSVERFAHREN, UND SYSTEM, WELCHES MIT EINER VORRICHTUNG ZUR BEREITSTELLUNG EINER DIGITALEN HERVORHEBUNGSPLATTFORM AUSGESTATTET IST
DISPOSITIF DE FOURNITURE DE PLATEFORME DE SIGNALISATION NUMÉRIQUE, SON PROCÉDÉ DE FONCTIONNEMENT, ET SYSTÈME COMPRENANT UN DISPOSITIF DE FOURNITURE DE PLATEFORME DE SIGNALISATION NUMÉRIQUE

(30) Priority: 12.01.2021 KR 20210004116
(43) Date of publication of application: 02.11.2022
(73) Proprietor: LG ELECTRONICS INC., Yeongdeungpo-gu Seoul 07336 (KR)
(72) Inventor: LEE, Jinsang, Seoul 06772 (KR); KIM, Sujin, Seoul 06772 (KR); KANG, Byoungsu, Seoul 06772 (KR); SON, Jinho, Seoul 06772 (KR)
(74) Representative: Vossius & Partner Patentanwälte Rechtsanwälte mbB
(86) International application number: PCT/KR2021/019615
(87) International publication number: WO 2022/154299

(56) References cited:
- JP-A- 2017 126 142
- JP-A- 2019 164 001
- KR-A- 20190 078 676
- KR-B1- 101 817 452
- US-A1- 2012 113 138
- US-A1- 2016 121 723
- US-A1- 2017 200 048
- US-A1- 2019 180 485

## Description

### CROSS-REFERENCE TO RELATED APPLICATIONS

This application claims priority to International Application No. PCT/KR2021/019615 filed on 22 December 2021 (Priority Date 12 January 2021).

### Technical Field

The present invention relates to a digital signage platform providing apparatus and a system including the same, and more particularly, to a digital signage platform providing apparatus for providing a platform capable of displaying augmented reality (AR) digital signage on a driving image of a vehicle on a floor-by-floor basis and a system including the same.

### Background Art

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

The convenience function of the vehicle has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, a technology for augmented reality (AR) that outputs a graphic object through a vehicle's windshield or head-up display (HUD) or that outputs a graphic object to an image captured by a camera to additionally output the graphic object to the real world is being actively developed. In particular, by utilizing such AR technology, the development of technologies for guiding a route to a driver through AR technology or for exposing various additional information or advertisements related to points of interest (POI) existing on a route is expanding.

Meanwhile, various guidance or advertisements through AR technology are expressed in the form of AR objects over an actual driving image. Thus, there was a sense of separation from reality, and there were limitations in providing a variety of information at once.

US 2019/180485 A1 discloses a vehicle control device which includes a sensing unit configured to include a camera, a display unit, and a controller including a processor configured to receive an image through the camera and to output a graphic object to the display unit such that the graphic object is superimposed on a preset destination, based on the preset destination being identified from the image.

US 2017/200048 A1 discloses an information processing method of displaying AR information corresponding to different restaurants located in a same building upon corresponding building areas in a captured image.

### Disclosure of Invention

### Technical Problem

The present invention aims to solve the above and other problems.

According to the present invention, an object of the present invention is to provide a digital signage platform providing apparatus capable of providing, to a driving image of a vehicle, augmented reality (AR) digital signage close to a real signboard, as provided in claim 1, an operating method thereof, as provided in claim 10, and a system including the same, as provided in claim 14.

According to the present invention, an object of the present invention is to provide a digital signage platform providing apparatus capable of providing, in a building including a plurality of points of interest (POIs), not one but a plurality of pieces of AR digital signage to positions corresponding to the POIs, an operating method thereof, and a system including the same.

According to some embodiments of the present invention, an object of the present invention is to provide a digital signage platform providing apparatus capable of naturally modifying and providing images of a plurality of pieces of AR digital signage according to the driving and surrounding structural environments of a vehicle, an operating method thereof, and a system including the same.

According to some embodiments of the present invention, an object of the present invention is to provide a digital signage platform providing apparatus capable of differentiating or highlighting images of a plurality of pieces of AR digital signage according to user preference, advertisement service level, etc., an operating method thereof, and a system including the same.

### Solution to Problem

To this end, the digital signage platform providing apparatus according to the present invention may generate, on a floor-by-floor basis, AR digital signage corresponding to content information for each of a plurality of pieces of POI information on the basis of floor number information and spatial coordinates for a building area including at least the plurality of pieces of POI information.

Also, based on sensing data of a vehicle and floor number information and spatial coordinates for the building area, the digital signage platform providing apparatus may calculate a reference point for displaying content information related to the plurality of pieces of POI information and perform a rendering request to display AR digital signage in a display area determined based on the calculated reference point.

Also, the digital signage platform providing apparatus may transmit a result of the rendering request to a user terminal and may allow the user terminal to map an image of AR digital signage corresponding to the result of the rendering request to a display area in a building area in a driving image, which is an image acquired through a sensor of a vehicle, and output the mapped image. In this case, the plurality of pieces of AR digital signage corresponding to the plurality of pieces of POI information are vertically connected and displayed in the display area in the building area of the driving image on a floor-by-floor basis.

In an embodiment of the present invention, there is provided a digital signage platform providing apparatus including a communication module configured to communicate with a user terminal and a cloud server, a memory, and at least one processor communicatively connected to the memory and configured to execute at least one computer-readable program included in the memory, wherein the at least one program includes instructions of receiving sensing data of a vehicle linked with the user terminal and transmitting a request for map information associated with the cloud server in response to a request received from the user terminal, calculating spatial coordinates for a building area including a plurality of pieces of point of interest (POI) information and acquiring floor number information for each of the plurality of pieces of POI information on the basis of received map information, calculating a reference point of the building area for displaying content information related to the plurality of pieces of POI information on the basis of the sensing data of the vehicle and the spatial coordinates and the floor number information for the building area, performing a rendering request for displaying augmented reality (AR) digital signage corresponding to the content information in a display area determined based on the calculated reference point, and transmitting a result of the rendering request to the user terminal and transmitting an image correction request so that the user terminal maps an image of the AR digital signage corresponding to the result of the rendering request to a display area of a building in a driving image acquired through a vision sensor on a floor-by-floor basis.

In an embodiment, display areas of a plurality of pieces of AR digital signage corresponding to the plurality of pieces of POI information may be determined by the processor using floor number information matched to the plurality of pieces of POI information and height information of the building area calculated based on the spatial coordinates for the building area.

In an embodiment, the reference point may be calculated by detecting reference coordinates of the building area in the driving image related to the driving direction and location of the vehicle.

In an embodiment, at least one of the location and shape of each of the determined display areas may be corrected by the processor on the basis of a result of the comparison of the height information of each of the determined display areas and data included in the received map information.

In an embodiment, when it is determined that the spatial coordinates for the building area cannot be acquired based on the received map information, the display area may be determined by the processor using floor number information and height information of the building area estimated using camera sensing information included in the sensing data.

In an embodiment, the reference point may be calculated by detecting edges of the building area in the driving image and the driving direction of the vehicle.

In an embodiment, each of the determined display areas may be matched to each display area corresponding to the building area of the driving image, and an image correction request to map the image of the AR digital signage may be transmitted by the processor such that each of the matched display areas is moved from the calculated reference point by the height of the floor number information.

In an embodiment, the image of the AR digital signage mapped to the display area of the driving image may be formed to surround at least one side of the building area of the driving image.

In an embodiment, the content information may include at least one of a brand icon, a 3D model, a still image, and a moving image related to the POI information.

In an embodiment, an image correction request for the AR digital signage mapped to the display area may be transmitted by the processor on the basis of the reference point and the driving direction and speed of the vehicle.

In an embodiment, when the driving direction of the vehicle is toward the reference point, an image correction request that dynamically adjusts a shape change rate of the AR digital signage to the display area of the driving image varying in proportion to the driving speed of the vehicle may be transmitted by the processor.

In an embodiment, the image correction request for the dynamic adjustment of the shape change rate of the AR digital signage may be transmitted only when the driving speed of the vehicle satisfies a predetermined speed limit.

In an embodiment, when an angular change in the driving direction of the vehicle is greater than or equal to a preset threshold value on the basis of the sensing data, an output stop request for the AR digital signage may be transmitted by the processor.

According to an embodiment of the present invention, there is provided a method of providing a digital signage platform by at least one processor, the method including operations of receiving sensing data of an interoperating vehicle and transmitting a request for associated map information to a cloud server in response to a request received from a user terminal, calculating spatial coordinates for a building area including at least a plurality of pieces of point of interest (POI) information and acquiring floor number information for each of the plurality of pieces of POI information on the basis of received map information, calculating a reference point for displaying content information related to the plurality of pieces of POI information on the basis of the sensing data of the vehicle and the spatial coordinates and the floor number information for the building area, performing a rendering request to display augmented reality (AR) digital signage corresponding to the content information in a display area determined based on the calculated reference point, and transmitting a result of the rendering request to the user terminal and transmitting an image correction request so that the user terminal maps, on a floor-by-floor basis, an image of the AR digital signage corresponding to the result of the rendering request to a display area of a building in a driving image acquired through a vision sensor and outputs the mapped image.

In an embodiment, display areas of a plurality of pieces of AR digital signage corresponding to the plurality of pieces of POI information may be determined by the processor using floor number information matched to the plurality of pieces of POI information and height information of the building area calculated based on the spatial coordinates for the building area.

In an embodiment, each of the determined display areas may be matched to a corresponding display area in the building area of the driving image, and the operation of transmitting the image correction request may include an operation of transmitting an image correction request to map the image of the AR digital signage so that each of the matched display areas is moved from the calculated reference point by a height of the floor number information.

In an embodiment, the image of the AR digital signage mapped to the display area in the building area of the driving image may be formed to surround at least one side of the building area of the driving image.

In an embodiment, when the spatial coordinates for the building area cannot be acquired based on the received map information, the display area may be determined by the processor using floor number information and height information of the building area estimated using camera sensing information included in the sensing data.

In an embodiment, the operation of transmitting the image correction request may include an operation of transmitting an image correction request for the AR digital signage mapped to the display area on the basis of the reference point and the driving direction and speed of the vehicle.

According to an embodiment of the present invention, there is provided a digital signage providing system including a user terminal linked with a vehicle and a digital signage platform providing apparatus configured to communicate with the user terminal and a cloud server. Here, the digital signage platform providing apparatus may be configured to receive sensing data of the vehicle and transmitting a request for associated map information to the cloud server in response to a request received from the user terminal, calculate spatial coordinates for a building area including at least a plurality of pieces of point of interest (POI) information and acquire floor number information for each of the plurality of pieces of POI information on the basis of received map information, calculate a reference point for displaying content information related to the plurality of pieces of POI information on the basis of the sensing data of the vehicle and the spatial coordinates and the floor number information for the building area and perform a rendering request from an interoperating augmented reality (AR) engine in order to display AR digital signage corresponding to the content information in a display area determined based on the calculated reference point, and wherein the user terminal is configured to receive a result of the rendering request, map an image of AR digital signage corresponding to the result of the rendering request to a display area of a building in a driving image acquired through a vision sensor on a floor-by-floor basis and output the mapped image, receive an image correction request from the digital signage platform providing apparatus, change the output image of the AR digital signage, and then map the changed image.

### Advantageous Effects of Invention

The advantageous effects of the digital signage platform providing apparatus, the operating method thereof, and the system including the same according to the present invention are as follows.

According to some embodiments of the present invention, by mapping augmented reality (AR) signage to a building in a driving image and displaying the AR signage to be closely similar to a real signboard, it is possible to solve the awkwardness caused by artificially displaying an AR object on a driving route screen in a conventional manner.

According to some embodiments of the present invention, it is possible to solve the conventional limitation of displaying only one advertisement in one area even if augmented reality (AR) technology is used, and thus advantageously, it is possible to provide extensibility for providing a plurality of various advertisements to one building.

According to some embodiments of the present invention, by varying AR digital signage according to a varying driving image on the basis of driving-related sensing data of a vehicle and then performing mapping, it is possible to provide a realistic feeling as if a real signage signboard is installed in a building. In addition, by temporarily stopping the display of AR digital signage while a vehicle is performing a curve, it is possible to contribute to safe driving.

According to some embodiments of the present invention, by integrating a plurality of floors as necessary to provide more expanded AR digital signage, it is possible to maximize advertising effects and user interests.

### Brief Description of Drawings

FIG. 1 is a diagram illustrating an exemplary vehicle according to an implementation.
FIG. 2 is a diagram illustrating the vehicle according to the implementation at various angles.
FIGS. 3 and 4 are diagrams illustrating the interior of the vehicle.
FIGS. 5 and 6 are diagrams illustrating various objects related to driving (traveling) of the vehicle.
FIG. 7 is a block diagram illustrating the vehicle in accordance with the implementation.
FIG. 8 is a block diagram showing communication with a digital signage platform providing apparatus, a user terminal, and a cloud server according to an embodiment of the present invention.
FIG. 9 is a block diagram showing that an information processing system related to an embodiment of the present invention communicates with a plurality of user terminals.
FIG. 10 is a diagram illustrating a configuration of a digital signage platform providing apparatus according to an embodiment of the present invention.
FIG. 11 is a representative flowchart illustrating an operating method of a digital signage platform providing apparatus according to an embodiment of the present invention.
FIGS. 12 and 13 are diagrams illustrating a method of arranging AR digital signage in a building area of a driving image on a floor-by-floor basis according to an embodiment of the present invention.
FIGS. 14 and 15 are diagrams illustrating a method of correcting AR digital signage according to the driving direction and speed of a vehicle according to an embodiment of the present invention.
FIG. 16 is a diagram showing examples of various display types of AR digital signage according to an embodiment of the present invention.
FIG. 17 is a diagram specifically illustrating a method of displaying AR digital signage on a floor-by-floor basis according to an embodiment of the present invention.

### Mode for the Invention

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present invention may be understood as a conception including cars, motorcycles and the like. Hereinafter, the vehicle will be described based on a car.

The vehicle according to the embodiment of the present invention may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

In the present disclosure, "system" may include at least one of a server apparatus and a cloud apparatus, but is not limited thereto. For example, the system may be composed of one or more server apparatuses. As another example, the system may be composed of one or more server apparatuses. As still another example, the system may be operated by configuring a server apparatus and a cloud apparatus.

In the present disclosure, a "user terminal" or "user client" may be referred to as including a computing device and/or system or a user of a user terminal capable of communicating with a vehicle (or a vehicular electronic device, apparatus, or system provided in a vehicle) and an AR digital signage platform providing apparatus or system.

In the present disclosure, a "digital signage platform" may provide an embedded, an apparatus-based, or a cloud-based platform capable of Platform as a Service (PaaS) and/or Machine Learning as a Service (MLaaS). This digital signage platform is related to a method or operation of providing AR digital signage.

In the present disclosure, "map information" may be referred to as including images captured by a vision sensor such as a camera, two-dimensional (2D) map information, three-dimensional (3D) map information, a digital-twin 3D map, and map information in real/virtual space.

In the present disclosure, "point of interest (POI) information" indicates a point of interest selected based on the map information and may include pre-registered POI information (POIs stored in a map of a cloud server), user-set POI information (e.g., home, school, company, etc.), driving-related POI information (e.g., destination, stopover, gas station, rest area, parking lot, etc.). Such POI information may be updated based on the current location of the vehicle in real time.

In the present disclosure, "driving image" is obtained through a vision sensor of or near a vehicle and, for example, may include an image acquired or projected through a vision sensor (a camera, a laser sensor for images, etc.) during the driving of the vehicle and a real image or a virtual space image projected onto the vehicle's windshield. That is, the driving image may be referred to as including an image output through a display, an image projected through a laser sensor, or a real image seen through a vehicle windshield.

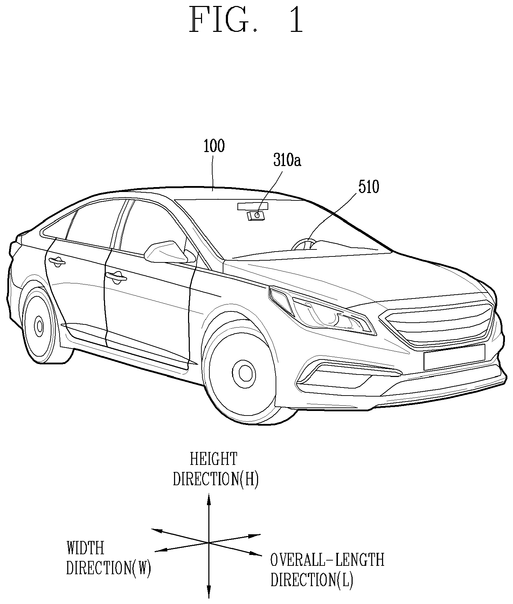

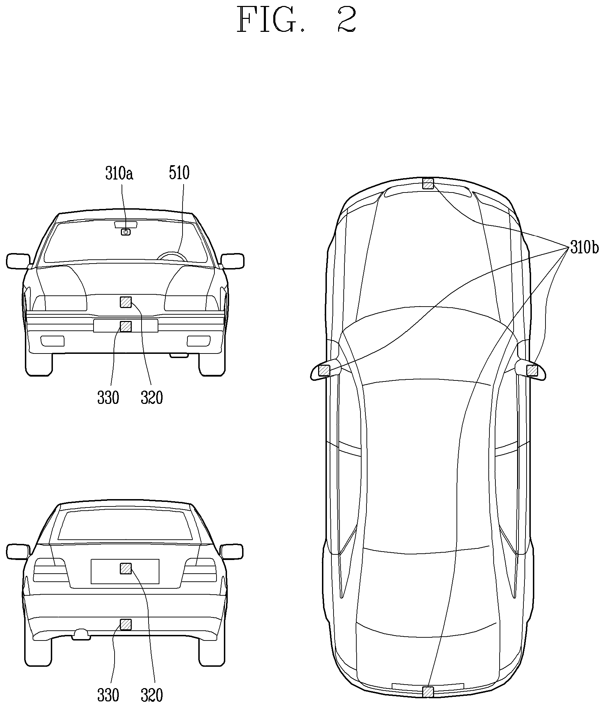

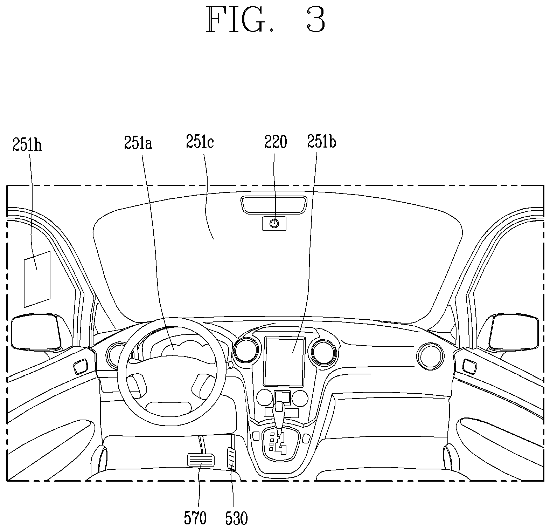

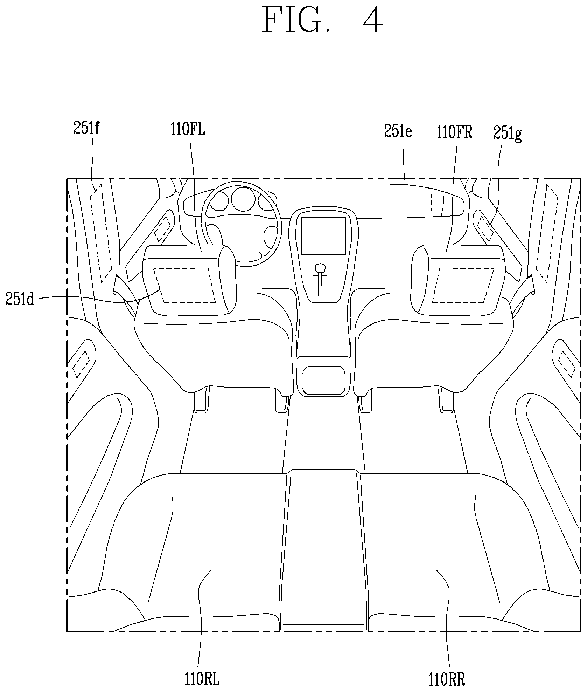

FIGS. 1 and 2 illustrate the exterior of a vehicle according to an implementation and FIGS. 3 and 4 illustrate the interior of the vehicle.

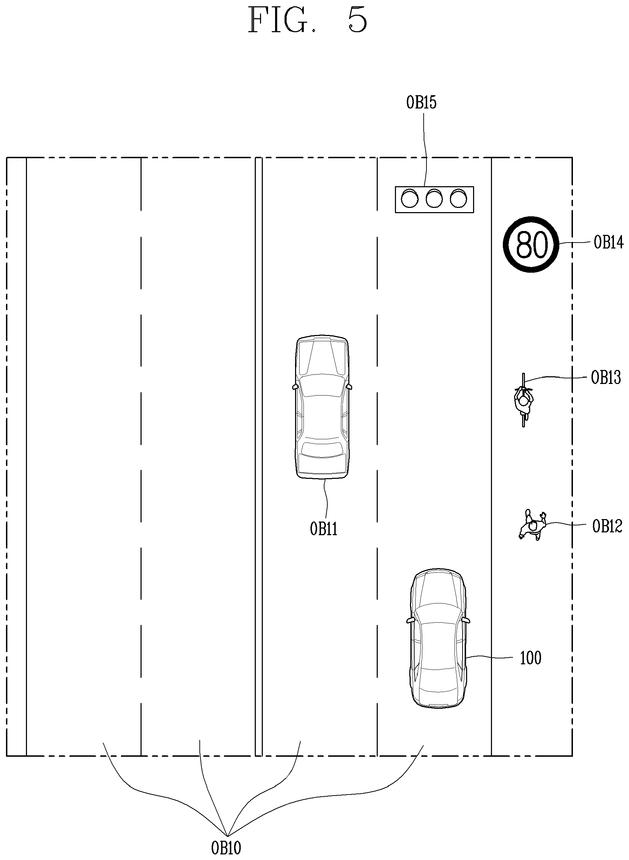

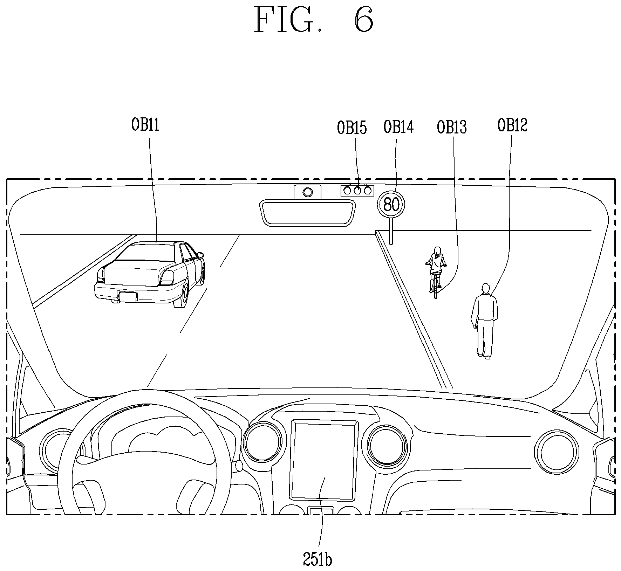

FIGS. 5 and 6 are diagrams illustrating various objects related to driving (traveling) of the vehicle.

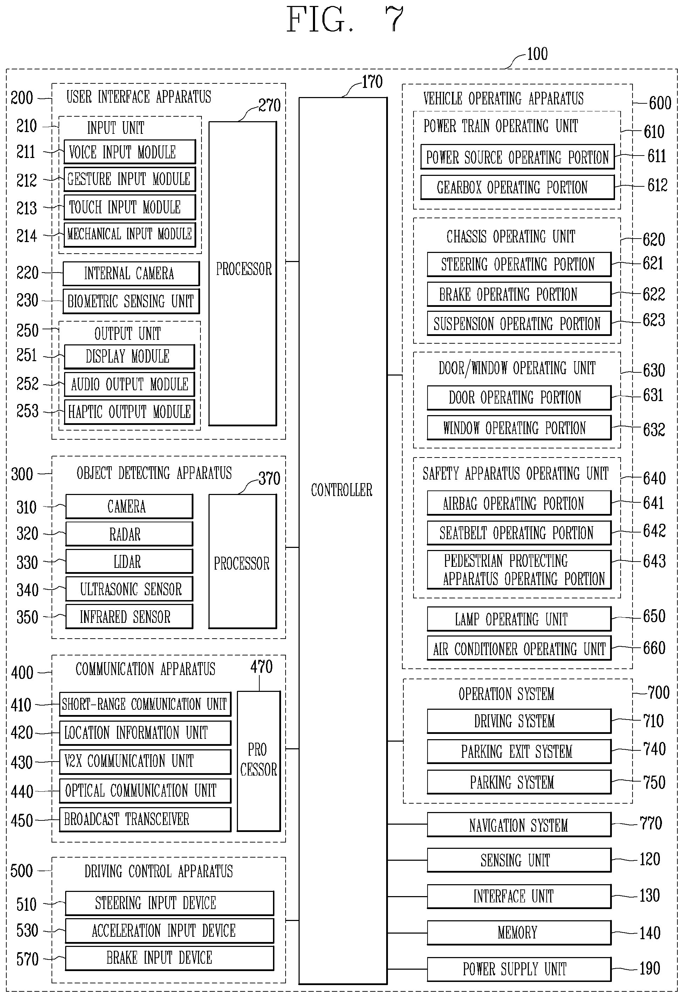

FIG. 7 is a block diagram illustrating the vehicle in accordance with the implementation. FIG. 7 is a block diagram illustrating the vehicle according to the implementation.

As illustrated in FIG. 1 to 7, a vehicle 100 may include wheels turning by a driving force, and a steering input device 510 for adjusting a driving (traveling, ongoing, moving) direction of the vehicle 100.

The vehicle 100 may be an autonomous vehicle. The vehicle 100 may be switched into an autonomous mode or a manual mode based on a user input. For example, the vehicle may be switched from the manual mode into the autonomous mode or from the autonomous mode into the manual mode based on a user input received through a user interface apparatus (hereinafter, referred to as 'user terminal') 200.

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 7, the vehicle 100 may include a user interface apparatus (hereinafter, referred to as 'user terminal') 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (UIs) or user experiences (UXs) through the user interface apparatus (hereinafter, referred to as 'user terminal') 200.

The user interface apparatus 200 may include an input unit 210, an internal camera 220, a biometric sensing unit 230, an output unit 250 and at least one processor, such as processor 270. In some implementations, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170. The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170. The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor (hereinafter, referred to as 'controller') 270 may control an overall operation of each unit of the user interface apparatus 200. In some implementations, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may include left and right lines defining a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may be a concept including another vehicle and a pedestrian. The fixed object may be, for example, a traffic signal, a road, or a structure.

The object detecting apparatus 300 may include a camera 310, a radar 320, a LiDAR 330, an ultrasonic sensor 340, an infrared sensor 350, and a processor 370.

In some implementations, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

In some implementations, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 may be configured in the form of a wheel allowing a steering input in a rotating manner. In some implementations, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

In some examples, the operation system 700 may include at least one processor. Each unit of the operation system 700 may individually include a processor.

In some implementations, the operation system may be implemented by the controller 170 when it is implemented in a software configuration.

In some implementations, the operation system 700 may be implemented by at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

In some implementations, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the digital signage platform providing apparatus according to the present invention may communicate with a user interface device (or hereinafter referred to as "user terminal") 200 or a navigation system 770 of a vehicle 100 to provide a platform and/or related data for providing AR digital signage to a building in a driving image on a floor-by-floor basis.

In the present disclosure, AR digital signage refers to providing multimedia information displayed on a building or related area in a driving image using augmented reality (AR) technology and is obtained by implementing a function such as an outdoor signboard with AR technology.

As disclosed herein, the displaying of AR digital signage in a building in which a plurality of pieces of POI information are present on a floor-by-floor basis refers to determining floor number information matched to the POI information and displaying content information corresponding to each floor of the building on a floor-by-floor basis using AR digital signage when content information (e.g., advertisement information, brand information, news information, etc.) related to the plurality of pieces of POI information is present.

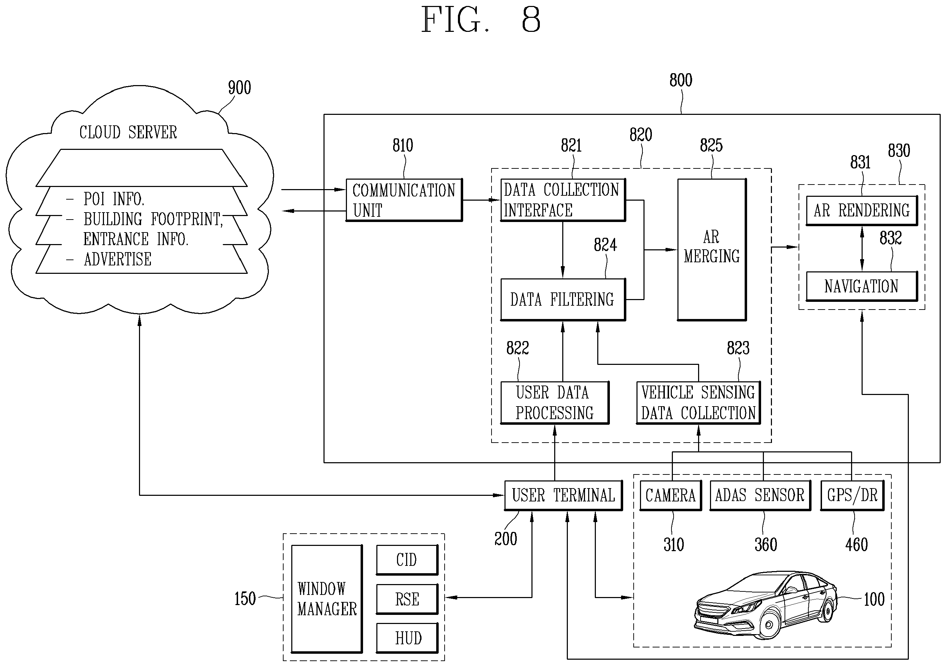

FIG. 8 is a block diagram showing that a digital signage platform providing apparatus 800 is communicatively connected to a user terminal 200, a vehicle 100, and a cloud server 900.

The digital signage platform providing apparatus 800 according to the present invention may be implemented as a portion of a vehicular electronic device or system of the vehicle 100 or may be included in the cloud server. Also, the digital signage platform providing apparatus 800 may be implemented in the form of a program implemented by a processor of the user terminal 200 linked with the vehicle 100.

The digital signage platform providing apparatus 800 may communicate with the vehicle 100 to collect sensing data through a sensor provided in the vehicle 100 and may collect and process user data through the user terminal 200 linked with the vehicle 100. The digital signage platform providing apparatus 800 may filter and process data collected in communication with the vehicle 100 and the user terminal 200 and information collected through the cloud server 900, perform AR merging, and make a rendering request to generate AR digital signage.

The digital signage platform providing apparatus 800 may transmit a result for the rendering request to the user terminal 200 and may request continuous image correction for performing mapping into a driving image displayed on a windshield, a dashboard, a head-up display (HUD), etc. through the user terminal 200. Here, the user terminal 200 may be implemented as a user interface device or a navigation system 770 implemented as a part of the system of the vehicle 100 as described above.

The digital signage platform providing apparatus 800 is communicatively connected to the cloud server 900 through the communication module 810. A plurality of cloud servers 900 may communicate with the digital signage platform providing apparatus 800.

The digital signage platform providing apparatus 800 may communicate with the cloud server 900 to receive map information such as 2D or 3D map information, building footprint information, entrance information, and floor number information including POI information.

Also, the digital signage platform providing apparatus 800 may communicate with the cloud server 900 to receive advertisement information about a POI (e.g., advertisement information collected in operative association with databases such as NoSQL DB, Mongo, etc. Also, the digital signage platform providing apparatus 800 may communicate with the cloud server 900 to receive real-time traffic information.

The digital signage platform providing apparatus 800 may collect and store the map information, advertisement information, and traffic information received from the cloud server 900 in a data collection interface 821. The collected and stored information is delivered for data filtering (824).

Also, the digital signage platform providing apparatus 800 receives vehicle sensing data from a camera 310, an advanced driver assistance systems (ADAS) sensor 360, and a global positioning system (GPS)/dead reckoning (DR) unit 460 provided in the vehicle 100 through a communication unit (not shown) or a user interface (not shown). Here, the vehicle sensing data may include, for example, a driving image acquired through the camera 310 provided in the vehicle, a driving direction and speed, a distance from a lane, and the like acquired through the ADAS sensor 360, and location data of the vehicle acquired through a vehicle navigation system such as the GPS/DR unit 460. The received vehicle sensing data is collected and stored through vehicle sensing data collection (823), and the stored information is delivered for the data filtering (824).

Also, the digital signage platform providing apparatus 800 may receive a request corresponding to a user input (e.g., a request for AR signage provision, a request for route guidance, etc.) from the user terminal 200 that is embedded in or linked with the vehicle 100. The received user input is processed through user data processing (822) and delivered for the data filtering (824).

In the data filtering (824) of the digital signage platform providing apparatus 800, information received from the cloud server 900, input information transmitted by the user terminal 200, and vehicle sensing data received from the vehicle 100 are filtered and processed so that only optimal data to be shown in a driving image remains.

Specifically, the digital signage platform providing apparatus 800 detects a building area including a plurality of pieces of POI information, calculates spatial coordinates of the building area, and acquires floor number information for each of the plurality of pieces of POI information on the basis of the map information received from the cloud server 900. Then, the digital signage platform providing apparatus 800 may calculate the reference point of the building area for displaying content information related to the plurality of pieces of POI information on the basis of the sensing data of the vehicle obtained by the vehicle sensing data collection (823) and the spatial coordinates and the floor number information of the building area.

The calculation of the reference point is a process for providing a realistic sense as if a signage signboard is displayed on an actual building by matching the viewpoint of an actual driving road or the above-mentioned driving image to the viewpoint of a screen in which the content information related to the plurality of pieces of POI information is to be rendered.

Next, the digital signage platform providing apparatus 800 performs a rendering request for displaying AR digital signage corresponding to the content information related to the plurality of pieces of POI information in a display area determined based on the calculated reference point.

To this end, the information or data filtered and processed by the data filtering (824) is AR-merged with map information collected through the cloud server 900 continuously and in real time (825). The digital signage platform providing apparatus 800 provides the AR-merged (825) information or data to an AR engine to request AR rendering.

The AR engine 830 may be embedded in the digital signage platform providing apparatus 800 as shown in FIG. 8. Alternatively, in other embodiments, the AR engine 830 may be implemented by the user terminal 200, the user interface device 200 (see FIG. 7) of the vehicle shown in FIG. 7, or a processor included in the navigation system 770 or may be implemented by a separate terminal, apparatus, or cloud server.

In response to the AR rendering request, the AR engine 830 may perform AR rendering (831) on a route of navigation (832) (or 2D or 3D map information on the basis of the AR-merged (825) information or data in real time. Thus, the actual driving road and the viewpoint of the screen in which the AR digital signage is to be rendered are matched with each other.

The result of rendering through the AR engine 830 may be transmitted to the user terminal 200. Based on the rendering result, the user terminal 200 may map the AR digital signage to corresponding floors of the building in the driving image displayed on the display of the user terminal 200 or a display device of the vehicle 100, for example, a center information display (CID), a cluster, a head-up display (HUD), a room mirror display, a rear-seat entertainment (RSE) system, a vehicle windshield/dashboard, or the like and output the mapped AR digital signage on a floor-by-floor basis.

In this case, a driving image captured or reflected through a camera sensor provided in the vehicle 100 is output to the display of the user terminal 200 or a display or LCD screen provided in the CID, HUD, or RSE of the vehicle 100, and AR digital signage is mapped to the corresponding driving image. On the other hand, a vehicle display device such as an AR navigation system maps AR digital signage to the vehicle windshield or dashboard by direct projection through a laser sensor or the like provided in the vehicle 100.

Therefore, in the present disclosure, a "driving image" includes an image captured through a camera sensor (or smart glasses including such a function, an image reflected on the LCD screen through a camera sensor, an actual space image displayed on a windshield or dashboard into which AR digital signage is directed projected, digitally-twinned 3D image, and the like.

Meanwhile, the user terminal 200 may transmit the mapping result to the digital signage platform providing apparatus 800 such that the display area in which the image of the AR digital signage is mapped and the display area of the building in the driving image or the actual driving road are matched with each other and may receive an image correction request from the digital signage platform providing apparatus 800 continuously and in real time.

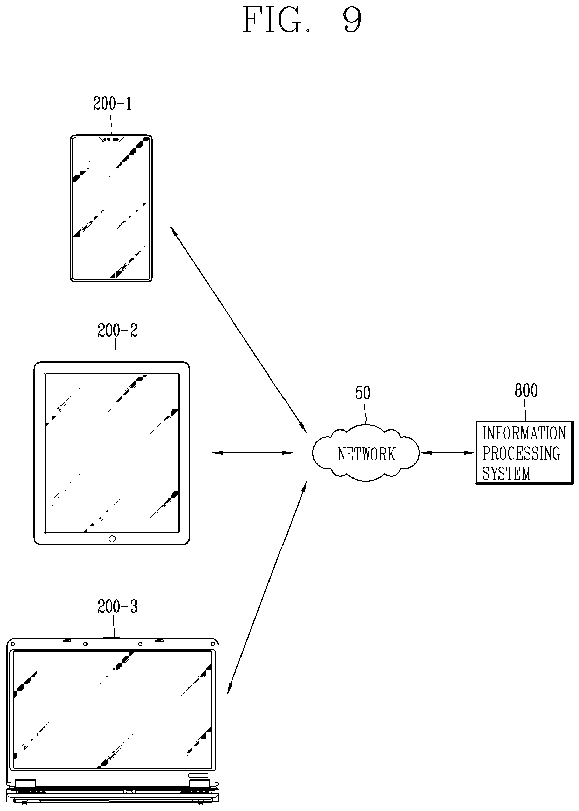

FIG. 9 is a block diagram showing that an information processing system related to an embodiment of the present invention is communicatively connected to a plurality of user terminals.

FIG. 9 is a schematic diagram illustrating a configuration in which an information processing system 800 according to an embodiment of the present disclosure is communicatively connected to a plurality of user terminals 200_1, 200_2, and 200_3. Here, the information processing system 800 may refer to a system capable of providing a digital signage platform according to the present invention. Also, the plurality of user terminals 200_1, 200_2, and 200_3 may be referred to as a device such as a user terminal embedded in, provided in, or connected to the vehicle 100.

As shown, the plurality of user terminals 200_1, 200_2, and 200_3 may be connected to an information processing system capable of providing an AR rendering request result for generating AR digital signage over a network 50. Here, the plurality of user terminals 200_1, 200_2, and 200_3 may include a terminal of an authorized operator (e.g., a registered driver or the like) and/or a user who can receive an AR rendering request result for generating AR digital signage.

In an embodiment, the information processing system 800 may include one or more server apparatuses and/or databases capable of storing, providing, and executing computer-executable programs (e.g., downloadable applications) and data related to the generation of AR digital signage or one or more distributed computing devices and/or distributed databases based on cloud computing service.

The result of the rendering request for the AR digital signage provided by the information processing system 800 may be provided to a user through an application related to the provision of AR digital signage, a route guidance application, a mobile browser application, a web browser, or a web browser extension program which is installed in each of the plurality of user terminals 200_1, 200_2, and 200_3.

For example, the information processing system 800 may provide information corresponding to an AR digital signage provision request received from the user terminals 200_1, 200_2, and 200_3 through the route guidance application or the like or may perform a corresponding process.

The plurality of user terminals 200_1, 200_2, and 200_3 may communicate with the information processing system 800 over the network 50. The network 50 may be configured to enable communication between the information processing system 800 and the plurality of user terminals 200_1, 200_2, and 200_3. For example, depending on the installation environments, the network 50 may be configured as a wired network such as Ethernet, wired home network (power line communication), a telephone line communication device, and RS-serial communication, a wireless network such as a mobile communication network, wireless LAN (WLAN), Wi-Fi, Bluetooth, and Zigbee, or a combination thereof. The communication scheme is not limited to the above networks and may include short-range wireless communication between the user terminals 200_1, 200_2, and 200_3 as well as a communication scheme that utilizes a communication network (e.g., a mobile communication network, the wired Internet, the wireless Internet, a broadcast network, a satellite network, etc.).

In FIG. 9, the plurality of user terminals 200_1, 200_2, and 200_3 may be any computing device that is capable of wired and/or wireless communication and in which an application related to the provision of AR digital signage, a route guidance application, a mobile browser application, a web browser, or a web browser extension program can be installed and executed.

For example, the user terminal includes an AI speaker, a smartphone, a mobile phone, a navigation system, a computer, a laptop computer, a digital broadcasting terminal, a personal digital assistant (PDA), a portable multimedia player (PMP), a tablet PC, a game console, a wearable device, an Internet of things (IoT) device, a virtual reality (VR) device, an augmented reality (AR) device, a set-top box, and the like.

Alternatively, for example, the user terminal may be a vehicle display device such as a CID, a cluster, a HUD, a room mirror display, an RSE, etc.

Also, the three user terminals 200_1, 200_2, and 200_3 are illustrated in FIG. 9 as communicating with the information processing system 800 through the network 50, but the present invention is not limited thereto. A different number of user terminals may be configured to communicate with the information processing system 800 via the network 50.

For example, the information processing system 800 may receive a request for route guidance or a request for the provision of AR digital signage from the plurality of user terminals 200_1, 200_2, and 200_3. The information processing system 800 may collect and merge information for generating AR digital signage in response to the received request, render the information in a display area to be displayed with AR signage, and provide the rendered information to the plurality of user terminals 200_1, 200_2, and 200_3.

Specifically, the information processing system 800 may receive sensing data of the vehicle 100 (see FIG. 8), request the cloud server to provide map information associated with the received vehicle sensing data, and receive and store the map information. The information processing system 800 may detect a building area including a plurality of pieces of POI information, calculate spatial coordinates of the detected building area, and acquire floor number information for each of the plurality of pieces of POI information on the basis of the received map information.

Also, the information processing system 800 may calculate the reference point of the building area for displaying content information related to the plurality of pieces of POI information on the basis of the sensing data of the vehicle and the spatial coordinate and floor number information of the building area. Also, the information processing system 800 may perform a rendering request to display AR digital signage corresponding to the content information related to the plurality of pieces of POI information in the display area determined based on the calculated reference point. Here, the rendering request may be performed by an AR engine, and the AR engine can be understood as referring to the operation of processors of the user terminals 200_1, 200_2, 200_3, a processor of an electric device embedded in the vehicle, a processor of the information processing system 800, or a processor of a linked apparatus, server, or system.

Subsequently, the information processing system 800 may transmit the result of the AR rendering request to the user terminals 200_1, 200_2, and 200_3 and may transmit an image correction request such that the user terminals 200_1, 200_2, and 200_3 map an image of the AR digital signage corresponding to the result of the rendering request to a display area of a building in a driving image acquired through a vision sensor on a floor-by-floor basis. The user terminals 200_1, 200_2, and 200_3 may map and output the image of the AR digital signage to the display area of the building in the driving image on a floor-by-floor basis and/or may map and output the image of the AR digital signage on a floor-by-floor basis in response to the image correction request received from the information processing system 800.

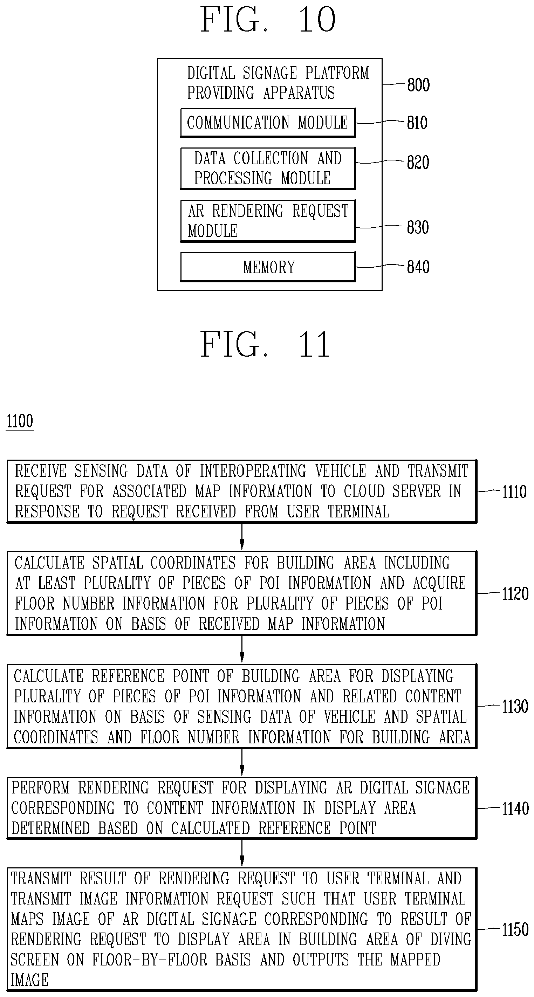

FIG. 10 is a diagram illustrating a configuration of the digital signage platform providing apparatus 800 according to an embodiment of the present invention.

In some embodiments, the digital signage platform providing apparatus 800 may be implemented as a device embedded in the navigation system 770 or the user terminal 200 embedded in or linked with the vehicle 100, as described above. Also, in some embodiments, the digital signage platform providing apparatus 800 may be implemented as a platform provided by the cloud server. Also, in other embodiments, the digital signage platform providing apparatus 800 may be implemented in the form of a separate terminal, device, system, or program independent of the vehicle 100 and the cloud server.

Referring to FIG. 10, the digital signage platform providing apparatus 800 according to an embodiment of the present invention may include a communication module 810, a data collection and processing module 820, an AR rendering request module 830, and a memory 840. However, the present invention is not limited thereto, and the digital signage platform providing apparatus 800 may include fewer elements or more elements. For example, the digital signage platform providing apparatus 800 may include an additional element such as an AR engine formed to perform rendering.

The communication module 810 is formed so that the digital signage platform providing apparatus 800 can communicate with the cloud server 900 (see FIG. 8), the vehicle 100, and the user terminal 200. For example, in order to perform communication, the digital signage platform providing apparatus 800 may include at least one or a transmitting antenna, a receiving antenna, and a radio frequency (RF) circuit and an RF device capable of implementing various communication protocols or may include a wired or wireless interface device.

The data collection and processing module 820 collects, filters, and processes information that is related to vehicle sensing data, image data, a user input request, map information, and content information such as the location, the number of floors, and advertisements of the building area including the plurality of pieces of POI information and that is received through the communication module 810. Also, the information collection and processing module 820 may perform a series of operations for filtering, processing, and merging one or more pieces of information to generate AR digital signage corresponding to the content information related to the plurality of pieces of POI information.

The AR rendering request module 830 performs a rendering request to generate AR digital signage corresponding to the plurality of pieces of POI information. The AR rendering request module 830 causes the AR engine to, in operative association with a route guidance map of the vehicle, match the viewpoint (first viewpoint) of the driving image or the actual driving road to the viewpoint (second viewpoint) of the screen in which the AR digital signage is to be rendered, determine the display area in which the AR digital signage is to be rendered, and vary the display area continuously or in real time.

The memory 840 includes programs and instructions related to the overall operation of the digital signage platform providing apparatus 800. The memory 840 is communicatively connected to at least one processor (not shown), and the at least one processor may execute a program implemented with at least one computer-readable instructions included in the memory 840.

To this end, the memory 840 may include instructions for, in response to a request received from the user terminal, receiving sensing data of the vehicle linked with the user terminal and requesting the cloud server to provide map information associated with the sensing data of the vehicle. Also, the memory 840 may include instructions for calculating spatial coordinates of the building area including the plurality of pieces of POI information from the map information received from the cloud server and acquiring floor number information for each of the plurality of pieces of POI information on the basis of the spatial coordinates. Also, the memory 840 may include instructions for calculating the reference point of the building area in which the content information related to the plurality of pieces of POI information is to be displayed, on the basis of the sensing data of the vehicle and the floor number information and the spatial coordinates of the building area. Also, the memory 840 may include instructions for performing a rendering request to display AR digital signage corresponding to the content information in a display area determined based on the calculated reference point (i.e., a location in which an AR object is to be rendered). Also, the memory 840 may include instructions for transmitting the result of the rendering request to the user terminal and performing an image correction request to allow the user terminal to map the image of the AR digital signage corresponding to the result of the rendering request to the display area in the driving area acquired through the vision sensor on a floor-by-floor basis.

Meanwhile, the digital signage platform providing apparatus 800 configured to include such a configuration or function may be implemented as a part of a device or system embedded in the vehicle 100, implemented as a separate device or system, or embedded in the user terminal (or the user interface device 200 (see FIG. 7) or the navigation system 770).

FIG. 11 is a representative flowchart illustrating an operating method 1100 of a digital signage platform providing apparatus according to an embodiment of the present invention.

The operating method 1100 of FIG. 11 may be implemented by a processor provided in the digital signage platform providing apparatus 800 or a processor provided in a user terminal (or a vehicular electronic device or system of a vehicle, a cloud server, etc.) communicatively connected to the digital signage platform providing apparatus 800 and may provide a platform for generating AR digital signage.

Referring to FIG. 11, first, the operating method 1100 is disclosed as a process of receiving, by the digital signage platform providing apparatus, sensing data of a linked vehicle and transmitting a request for associated map information to the cloud server in response to a request received from the user terminal (1110).

In an embodiment, the map information may include POI information and 2D/3D map information included within a predetermined range based on the current location of the vehicle. In another embodiment, the map information may be a driving image captured through a vision sensor, such as a camera, of the vehicle.

The digital signage platform providing apparatus calculates spatial coordinates of the building area including the plurality of pieces of POI information from the received map information and acquires floor number information for each of the plurality of pieces of POI information (1120).

In other words, when a building including a plurality of POIs is detected or recognized from the map information by the processor of the digital signage platform providing apparatus, the digital signage platform providing apparatus may calculate xyz coordinate information of the building as the spatial coordinates.

In one embodiment, when the map information is 2D/3D map information received from the cloud server, the digital signage platform providing apparatus may receive the information regarding the location, height, and number of floors of the building area including the plurality of pieces of POI information on the basis of the map information and calculate the spatial coordinates of the building area. In another embodiment, when the map information is a driving image acquired through a camera provided in the vehicle, the digital signage platform providing apparatus may estimate the location, height, and number of floors of the building area on the basis of the driving image and estimate the spatial coordinates from the location, height, and number of floors.

In this way, when the spatial coordinates of the building area are calculated, the digital signage platform providing apparatus may calculate or estimate floor number information for each of the plurality of pieces of POI information included in the building area. For example, the digital signage platform providing apparatus may calculate a floor-by-floor height value, i.e., a height offset on the basis of the height and number of floors of the building included in the spatial coordinates of the building area and may compute or estimate the number of floors corresponding to the plurality of pieces of POI information on the basis of the calculated height offset.

Subsequently, the digital signage platform providing apparatus calculates a reference point for displaying content information related to the plurality of pieces of POI information on the basis of the sensing data of the vehicle and the spatial coordinates and floor number information of the building area (1130).

Here, POI-related content information may refer to a brand icon, a 3D model, a still image, and a moving image for POI-related advertisement exposure.

The reference point of the building area for displaying the content information may be calculated by matching the information regarding the vehicle sensing data (the vehicle's driving speed and direction), the spatial coordinates of the building area, and the floor number information of the plurality of pieces of POI information to correspond to the driving image. That is, by using AR technology, the viewpoint of the driving image or the actual driving road (e.g., in the case of an AR navigation device in which AR digital signage is projected on a windshield through a laser sensor) and the content information are matched to the viewpoint of the screen for finding the reference point of the building area for displaying the content information.

In an embodiment, the reference point may be determined as a coordinate point close to the current location among the spatial coordinates of the building area on the basis of the driving direction of the vehicle.

In an embodiment, the display area for each of the plurality of pieces of POI information is obtained by applying a height offset to the floor number information corresponding to the plurality of pieces of POI information with respect to the reference point and is set as a location moved from the reference point by a corresponding floor number + a height offset.

Here, the coordinate point close to the current location of the vehicle may be acquired or estimated by detecting edges of the building identified using coordinate data included in the map information or camera sensing information provided in the vehicle. In this case, a reference point for each piece of content information corresponding to the plurality of pieces of POI information (hereinafter referred to as a "floorwise reference point") may be set as the reference point + a height offset corresponding to a floor number matched to each piece of POI information. That is, a floorwise reference point is calculated for and applied to each of the plurality of pieces of content information.

The digital signage platform providing apparatus performs an AR rendering request to display AR digital signage corresponding to the content information in a display area determined based on the calculated reference point (1140).

In this regard, the digital signage platform providing apparatus may determine display areas for mapping a plurality of pieces of AR digital signage matched to the plurality of pieces of POI information to corresponding floors of the building.

Specifically, the digital signage platform providing apparatus may determine the display areas of the plurality of pieces of AR digital signage corresponding to the plurality of pieces of POI information using floor number information matched to the plurality of pieces of POI information and height information of the building area calculated based on the spatial coordinates for the building area.

In an embodiment, when the spatial coordinates for the building area cannot be acquired based on the map information, the digital signage platform providing apparatus may determine a display area to which the content information is to be mapped by using floor number information and height information of the building area estimated using the camera sensing information included in the vehicle sensing information.

Meanwhile, according to an embodiment of the present invention, the AR rendering request performed by the digital signage platform providing apparatus is performed by an AR engine. The AR engine may be implemented by a processor of the digital signage platform providing apparatus, a processor of the user terminal, a processor of another vehicular electronic device or system of the vehicle, or a cloud server.

When rendering is performed through the AR engine as described above, the digital signage platform providing apparatus transmits a result of the rendering request to the user terminal. Thus, the digital signage platform providing apparatus transmits an image correction request to the user terminal so that the user terminal maps an image of AR digital signage corresponding to the result of the rendering request to a display area of the building in the driving image acquired through the vision sensor on a floor-by-floor basis and then outputs the image (1150).

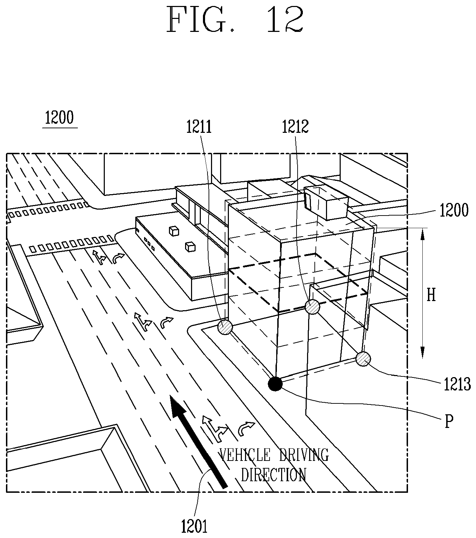

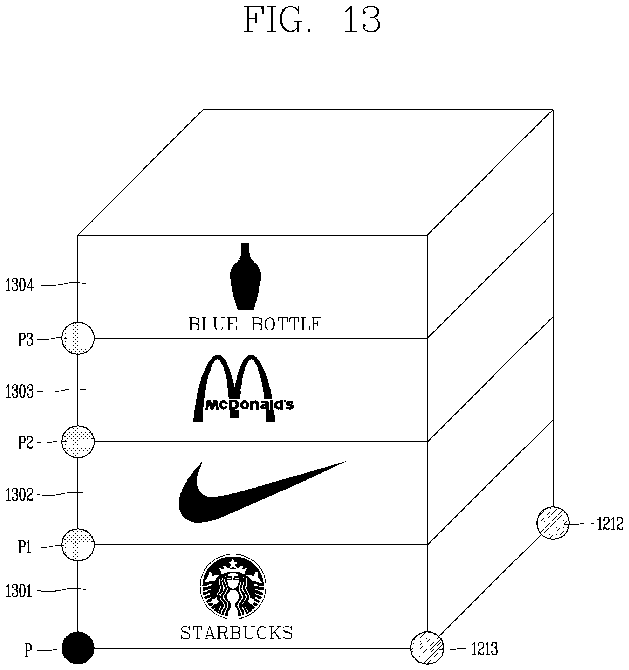

In an embodiment, the image correction request may be a request for mapping the image of the AR digital signage so that each display area matched to a corresponding piece of content information is moved from the calculated reference point by the height of each piece of floor number information. This will be described in detail below with reference to FIGS. 12 and 13.

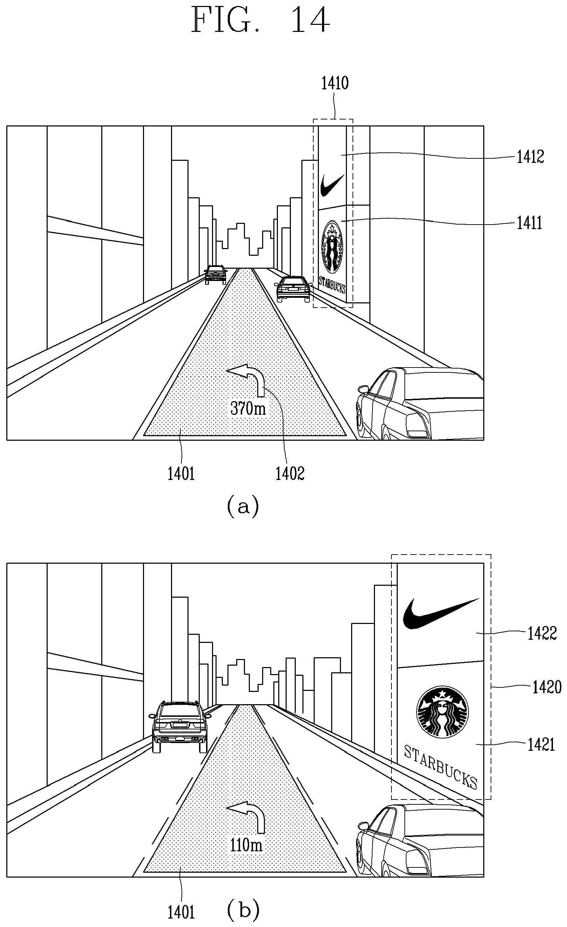

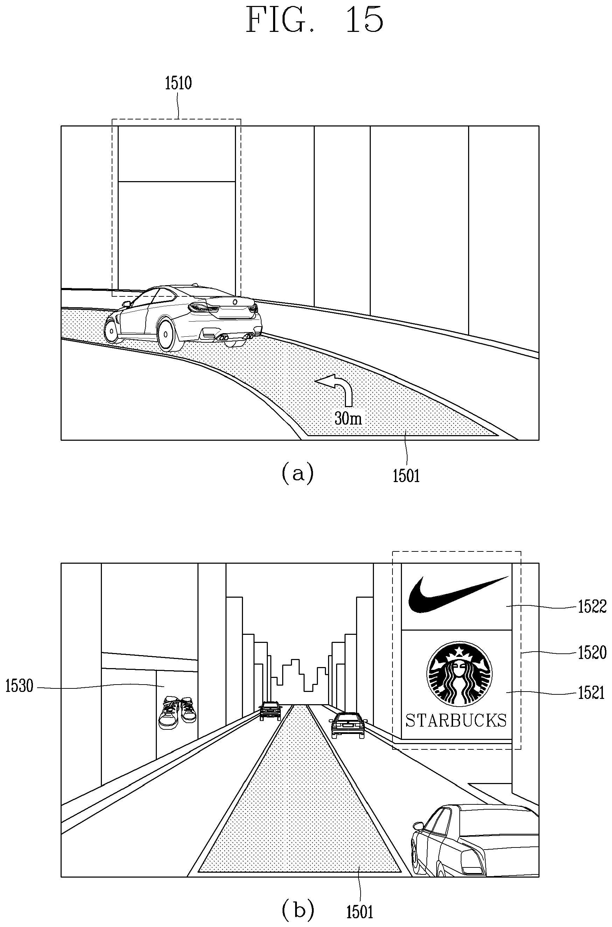

Also, in an embodiment, the image correction request may be a request to map, on a floor-by-floor basis, AR digital signage to a display area that is changed based on the reference point (or a floorwise reference point) and the driving direction and speed of the vehicle. A specific example thereof will be described in detail below with reference to FIGS. 14 and 15.

FIGS. 12 and 13 are diagrams illustrating a method of arranging AR digital signage on a floor-by-floor basis in a building area of a driving image according to an embodiment of the present invention.

The method of arranging AR digital signage on a floor-by-floor in a building area of a driving image may be implemented by a processor of the digital signage platform apparatus according to the present invention. Alternatively, as another example, the method may be implemented by a processor of a vehicle display device (e.g., a user interface device, navigation system, or the like provided in a vehicle) including a digital signage platform or may be implemented by a communicatively connected cloud server.

Referring to 12, when a building area 1200 including a plurality of pieces of POI information is detected, the digital signage platform providing apparatus according to the present invention may calculate (or estimate) spatial coordinates 1211, 1212, 1213, and P for the building areas on the basis of the map information (e.g., 2D/3D map information, the number of floors of the building area, and height information, etc.) or the driving image acquired through a camera provided in the vehicle.

The digital signage platform providing apparatus may extract an origin P for mapping AR digital signage to the driving image on a floor-by-floor basis by using the sensing data of the vehicle (e.g., a vehicle driving direction), the spatial coordinates 1211, 1212, 1213, and P, and the information on the height and number of floors of the building included in the map information (or estimated through the detection of edges of the driving image).

That is, considering the driving direction 1201 of the vehicle among the spatial coordinates 1211, 1213, 1213, and P of the building area, reference coordinates closest to the location of the vehicle included in the sensing data of the vehicle is set as the origin P.

For example, when the information on the number of floors and height of the building area 1200 can be acquired, the digital signage platform providing apparatus may calculate the origin P considering the driving direction of the vehicle. However, when the map information for the building area 1200 is not present (or is not recognized) or when the information on the number of floors and height cannot be acquired, the digital signage platform providing apparatus may extract the origin of the building area by estimating the number of floors and height of the building from the image of the building using the sensing information of the camera provided in the vehicle and detecting edges of the image. In this case, the height for each floor may use a predefined value.

Meanwhile, in order to display a plurality of pieces of AR digital signage on a floor-by-floor basis, a "floorwise reference point" should be calculated for each of the plurality of pieces of AR digital signage.

In this regard, referring to FIG. 13, the "floorwise reference point" for each of the plurality of pieces of AR digital signage may be placed by moving the height by the number of floors of the POI information with respect to the origin P and the spatial coordinates 1211, 1212, 1213, and P of the building area. That is, the digital signage platform providing apparatus determines, as a "floorwise reference point," a location to which a height offset corresponding to the number of floors matched to the origin P + each piece of POI information is applied, and requests correction such that corresponding AR digital signage is mapped to the location.

In FIG. 13, the reference point of first AR digital signage 1301 displayed on the first floor of the building area 1200 is determined as the origin P. The floorwise reference point of second AR digital signage 1302 displayed on the second floor of the building area 1200 is determined as a point P1 obtained by applying a height offset corresponding to the second floor to the origin P. Also, the floorwise reference points of third AR digital signage and fourth AR digital signage displayed on the third floor and the fourth floor of the building area 1200 are determined as points P2 and P3 obtained by applying the height offsets corresponding to the third floor and the fourth floor to the origin P.

In order to more accurately calculate the height information of the building area, in one embodiment, the digital signage platform providing apparatus may compare the height information (e.g., an interfloor height offset) of each display area determined based on the floorwise reference points and the height information included in the map information (e.g., 2D/3D map information) received from the cloud server and may correct at least one of the location and shape of each display area on the basis of the comparison result. Also, in an embodiment, when the detected difference between the height information and the value of a set of interfloor heights that are initially calculated and the height information of the building area acquired through a database (DB) is greater than or equal to a threshold value (a normal error range), the digital signage platform providing apparatus may correct the location of each display area using the height information of the database (DB).

For example, the digital signage platform providing apparatus may change the interfloor height offset described with reference to FIG. 13. Alternatively, the digital signage platform providing apparatus may, for example, map a plurality of pieces of AR digital signage 1301, 1302, 1303, and 1304 to the lateral side, not the front side, of the building area 1200 in FIG. 13 on a floor-by-floor basis.

Meanwhile, in an embodiment, the plurality of pieces of AR digital signage 1301, 1302, 1303, and 1304 mapped to the building area 1200 on a floor-by-floor basis surround at least one side of each display area of the building in the driving image. For example, in FIG. 13, the plurality of pieces of AR digital signage 1301, 1302, 1303, and 1304 are formed to surround the front side of the building area 1200 on a floor-by-floor basis. Accordingly, a plurality of advertisement exposure effects are provided to one building on a floor-by-floor basis, and this gives a realistic feeling as if a real signage signboard is placed on the building.

FIGS. 14 and 15 are diagrams illustrating a method of correcting AR digital signage according to the driving direction and speed of a vehicle according to an embodiment of the present invention.

Even after mapping different pieces of AR digital signage to one building on a floor-by-floor basis, the digital signage platform providing apparatus according to the present invention receives sensing data of the vehicle by communicating with the vehicle 100 continuously and in real time and continuously updates the collection of the map information or the like on the basis of the received sensing data.

The digital signage platform providing apparatus continuously corrects the AR digital signage mapped to the display area of the building in the driving image in response to changes in the location, driving direction, and driving speed of the vehicle on the basis of the sensing data of the vehicle.

In an embodiment, the digital signage platform providing apparatus may transmit an image correction request for the AR digital signage mapped to the display area to a user terminal and the like on the basis of the driving direction and speed of the vehicle and the reference point (or interfloor reference point) of the display area to which the AR digital signage is to be mapped. Thus, the user terminal and the like may continuously correct and output the display locations of the images of the AR digital signage.

For example, as shown in FIG. 14A, a plurality of pieces of AR digital signage 1411 and 1412 matched to a plurality of pieces of POI information are displayed on a floor-by-floor basis in a building 1410 in a driving image 1401 of a vehicle. In this case, when the driving direction 1402 of the vehicle is toward the building 1410 of the driving image 1401, such information is transmitted to the digital signage platform providing apparatus according to the present invention.

Thus, as shown in FIG. 14B, the image of the building 1410 gradually increases in response to the driving direction 1402 and the driving speed of the vehicle, and accordingly, the images of the plurality of pieces of AR digital signage 1421 and 1422 mapped to the building 1410 on a floor-by-floor basis are continuously corrected so that they can be increased in size and then mapped.

In an embodiment, the digital signage platform providing apparatus continuously corrects the plurality of pieces of AR digital signage while the amount of angular change of the head direction of the driving vehicle, which is determined based on the sensing data of the vehicle, is maintained within a threshold value. That is, the digital signage platform providing apparatus may be limited to performing continuous correction of the plurality of pieces of AR digital signage only when the driving vehicle is determined as being in a straight section.

Meanwhile, when it is determined that the amount of change in the angle of the head direction of the driving vehicle determined based on the sensing data of the vehicle exceeds the threshold value or sequentially increases, the digital signage platform providing apparatus may stop displaying the AR digital signage. That is, when the vehicle enters a curved section, the digital signage platform providing apparatus may temporarily turn off the display of an AR object in the driving image in order to secure visibility for safe driving.

For example, as shown in FIG. 15A, the digital signage platform providing apparatus may not display AR digital signage on a building 1510 in a driving image 1501 while the vehicle is in a curved section. Subsequently, when it is determined that the vehicle enters a straight section, as shown in FIG. 15B, the digital signage platform providing apparatus may map a plurality of pieces of AR digital signage 1521 and 1522 to a building 1520 in the driving image 1501 on a floor-by-floor basis and output the plurality of pieces of AR digital signage 1521 and 1522. Meanwhile, as shown on the left side of FIG. 15B, the digital signage platform providing apparatus may perform mapping such that only one piece of AR digital signage 1530 is displayed on a building including a plurality of pieces of POI information.

Meanwhile, although not shown, when the driving direction of the vehicle is toward the reference point, the digital signage platform providing apparatus may transmit an image correction request for dynamically adjusting the shape change rate of the AR digital signage to the display area of the driving image that changes in proportion to the driving speed of the vehicle.

Specifically, the digital signage platform providing apparatus according to the present invention may perform control to transmit an image correction request for dynamically adjusting the shape change rate of the AR digital signage only when the driving speed of the vehicle satisfies a predetermined speed range.

For example, when the driving speed of the vehicle exceeds a threshold range, the digital signage platform providing apparatus may limit the shape change of the AR digital signage or limit the display of the AR digital signage so that the driver can focus on the driving. Subsequently, when the driving speed of the vehicle decreases to the threshold range, the digital signage platform providing apparatus may resume the display of the AR digital signage and make a correction request to perform a change in shape on the basis of the sensing data of the vehicle.

As described above, according to some embodiments of the present invention, by varying AR digital signage according to a varying driving image on the basis of driving-related sensing data of a vehicle and then performing mapping, it is possible to provide a realistic feeling as if a real signage signboard is installed in a building. In addition, by temporarily stopping the display of AR digital signage while a vehicle is performing a curve, it is possible to contribute to safe driving.

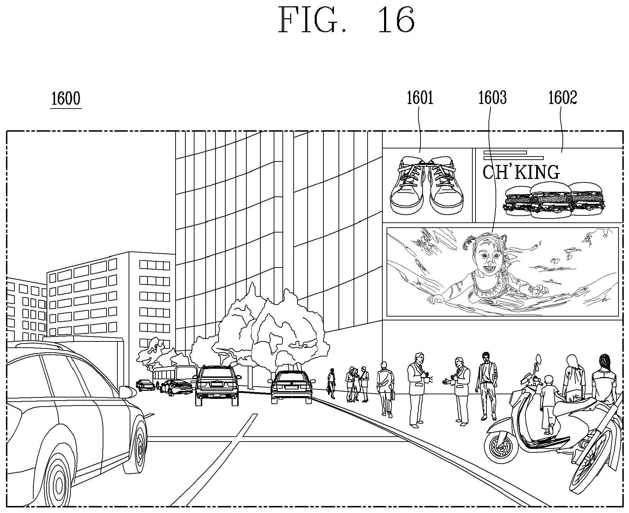

FIG. 16 is a diagram showing examples of various display types of AR digital signage according to an embodiment of the present invention.

In an embodiment of the present invention, content information related to a plurality of pieces of POI information may include at least one of a brand icon, a 3D model, a still image, and a moving image for each piece of POI information.

For example, as shown in FIG. 16, the content types of a plurality of pieces of AR digital signage 1601, 1602, and 1603 mapped to a building in a driving image 1600 on a floor-by-floor basis may be different from each other, such as moving pictures, brand icons, and still images.

In an embodiment, different content types may be applied to the plurality of pieces of AR digital signage 1601, 1602, and 1603 and mapped to the display area according to user preference and advertisement service level. For example, when the user preference is high and/or the advertisement service level is set to be high, AR digital signage of a content type with great advertising effect may be generated and mapped.

Also, in an embodiment, the digital signage platform providing apparatus may size display areas for the plurality of pieces of AR digital signage 1601, 1602, and 1603 according to the user preference and the advertisement service level and then map the plurality of pieces of AR digital signage 1601, 1602, and 1603. For example, when the user preference is high and/or the advertisement service level is set to be high, the digital signage platform providing apparatus may map AR digital signage after integrating a plurality of floors or by using the entire building as the display area.

According to some embodiments of the present invention, as described above, by integrating a plurality of floors as necessary to provide more expanded AR digital signage, it is possible to maximize advertising effects and user interests.

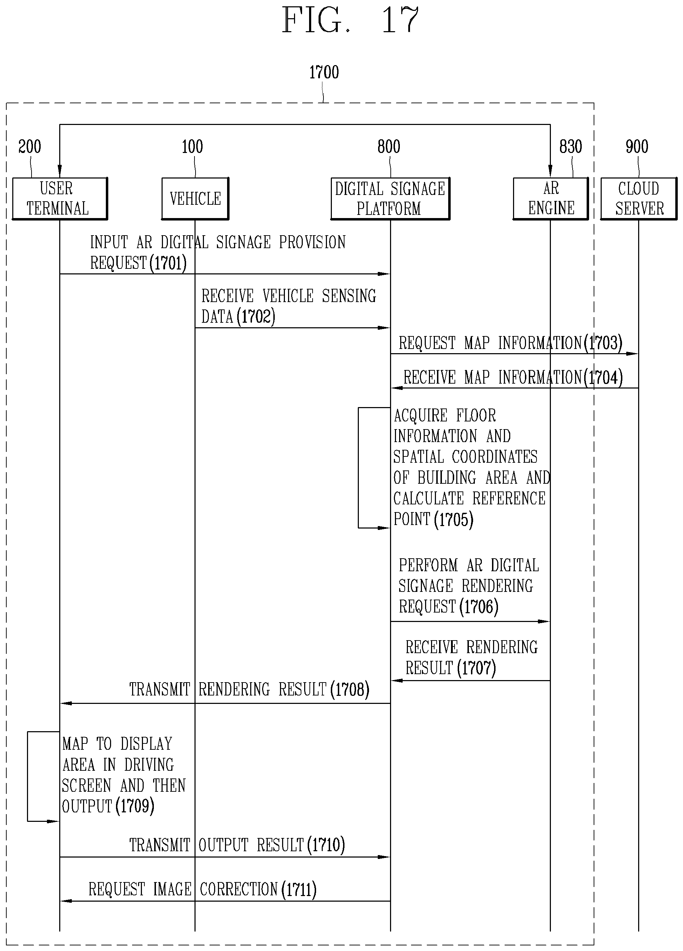

FIG. 17 is a diagram specifically illustrating a method of displaying AR digital signage on a floor-by-floor basis according to an embodiment of the present invention.

In FIG. 17, a system 1700 for displaying AR digital signage on a floor-by-floor basis may include a user terminal 200, a vehicle 100, a digital signage platform 800, and an AR engine 830, and the system 1700 may be communicatively linked with one or more cloud servers 900 that provide map data (e.g., POIs), traffic information, and advertisement/event information). In an embodiment, the AR engine 830 may be implemented as being executed by a processor embedded in the user terminal 200. Also, in another embodiment, the AR engine 830 may be implemented by a process of other vehicular electronic devices of the vehicle 100 or may be implemented by being included in another apparatus, system, or cloud server communicatively connected to the user terminal 200 and the digital signage platform 800 and then being executed by the apparatus, system, or cloud server.

Referring to FIG. 17, first, the digital signage platform 800 receives an AR digital signage provision request input 1701 from the user terminal 200. The input 1701 of the AR digital signage provision request may include various input methods, such as a preset voice command and an input signal corresponding to a user's gaze, in addition to a predetermined key input, touch input, and gesture input.

In an embodiment, the input 1701 of the AR digital signage provision request input 1701 may be included upon request for normal driving-related settings such as destination setting and navigation guidance start. Also, in another embodiment, the AR digital signage provision request input 1701 may be a direct setting request related to AR signage provision.

The digital signage platform 800 receives vehicle sensing data from the vehicle 100 linked with the user terminal 200 in response to receiving the input (1702). In an embodiment, the vehicle sensing data may include sensing data of a camera provided in the vehicle 100, vehicle driving-related sensing data of an advanced driver assistance system (ADAS), vehicle destination-related navigation data, and vehicle location-related sensing data of global positioning system (GPS)/dead reckoning (DR). In addition, the vehicle sensing data may also include sensing data of advanced ADAS such as blind spot detection (BSD) and highway driving assist (HDA).

The digital signage platform 800 transmits a map information request to the interoperating cloud server 900 on the basis of the vehicle sensing data collected in this way (1703). Also, the digital signage platform 800 may receive map information from the cloud server 900 in response to the map information request (1704).

Here, the map information may include an image captured through a vision sensor (e.g., an image projected through a laser sensor of a vehicle, an image captured through a vision sensor such as a camera sensor, etc.), 2D or 3D map information, and POI information (e.g., which can be classified into destination POI, favorite setting POI, POI with high recent clicks/visits, etc., in addition to general POI), floor number information when the POI is a building, etc.

In addition, the map information may be understood as including a digital-twin 3D map that is processed based on the map information (photographed images and 2D or 3D map information) received from the cloud server 900.

In an embodiment, the map information request 1703 may include requesting POI information existing on a guide route from the cloud server 900 on the basis of navigation data related to the destination of the vehicle. In this case, the reception of the map information (1704) may include additionally receiving POI information existing on a designation guide route in a captured image or 2D or 3D map information and information for displaying the POI information.

In an embodiment, the map information request may include requesting information on POIs located within a predetermined radius range with respect to the current location of the vehicle 100 from the cloud server 900. In this case, the reception of the map information (1704) may include additionally receiving POI information existing on a designation guide route in a captured image or 2D or 3D map information and information for displaying the POI information.

Subsequently, the digital signage platform 800 may detect a building area including a plurality of pieces of POI information, calculate spatial coordinates of the detected building area, and acquire floor number information for the plurality of pieces of POI information on the basis of the map information received from the cloud server 900.

Here, the spatial coordinates for the building area refer to xyz coordinates indicating the location of the building area including the plurality of pieces of POI information (i.e., which indicates that a plurality of POIs are placed on different floors in a building having at least a plurality of floors) detected from the above-described map information, that is, the captured image or the 2D or 3D map information on the basis of the vehicle sensing data.

This means transforming or processing the location of the building area including the plurality of pieces of POI information included in the map information received from the cloud server 900 into spatial coordinates matched with the type of the driving image in which the AR digital signage is to be represented.

In an embodiment, the spatial coordinates may be transformed (or processed) into the xyz coordinates of a building included in a driving image displayed on the user terminal 200 (e.g., an image acquired through a vision sensor (a camera, an imaging laser sensor, etc.) while the vehicle is traveling, an image of a real/virtual space projected onto the vehicle's windshield, etc.). In this case, the digital signage platform 800 may acquire the spatial coordinates of the building area including the plurality of pieces of POI information by continuously collecting the vehicle sensing data from the vehicle 100 and filtering and processing the map information received from the cloud server 900 on the basis of the collected vehicle sensing data.

When the spatial coordinates for the building area are calculated, the digital signage platform 800 may acquire floor number information for the plurality of pieces of POI information on the basis of the calculated spatial coordinates.

Specifically, the digital signage platform 800 may calculate the location information (height and floor number) of each piece of POI information and the height and number of floors of the building area matched to the spatial coordinates on the basis of the spatial coordinates calculated for the building area and the floor number information of the building area (and the floor number information of each POI in the building) included in the map information.

When the floor number information for each of the plurality of pieces of POI information is acquired as described above, the digital signage platform 800 calculates the reference point of the building area for displaying content information related to the plurality of pieces of POI information (e.g., a brand icon, a 3D model, a still image, and a moving image related to the POI information) (1705).

Here, the reference point P (see FIG. 12) of the building area for displaying the content information may be calculated by matching the information regarding the vehicle sensing data (the vehicle's driving speed and direction), the spatial coordinates of the building area, and the floor number information of each of the plurality of pieces of POI information to correspond to the driving image, as described above with reference to FIGS. 12 and 13.

At this time, the driving image is 2D or 3D map information based on the map information received from the cloud server 900, an image acquired through a vision sensor (e.g., a camera or an imaging laser sensor), or in some cases, an image of a real/virtual space projected onto the vehicle's windshield. In addition, the vehicle sensing data may include information about the driving direction of the vehicle. For example, the reference point may be determined as a coordinate point close to the current location among the spatial coordinates of the building area on the basis of the driving direction of the vehicle. Also, the coordinate point close to the current location may be acquired (or estimated) by detecting edges using camera sensing information or coordinate data included in the received map information.

Subsequently, the digital signage platform providing apparatus 800 performs a rendering request to display AR digital signage corresponding to the content information in a display area determined based on the calculated reference point (1706).

Here, the AR digital signage corresponding to the content information refers to multimedia information (e.g., icon, image, still image, video, 3D modeling image, etc.) mapped to a building or a corresponding display area using augmented reality (AR). Also, the AR digital signage is generated for each piece of content information corresponding to the plurality of pieces of POI information, and the plurality of pieces of content information are AR-merged such that the interfloor connection is made.

In an embodiment, the display area for each of the plurality of pieces of POI information is obtained by applying a height offset to the floor number information corresponding to the plurality of pieces of POI information with respect to the reference point and is set as a location moved from the reference point by a corresponding floor number + a height offset.

Here, the height offset refers to an interfloor height of the building area and may be acquired by matching the ratio of the height information of the building area in the driving image to the actual height information of the building area to the floor number information of the building area and then performing segmentation. For example, in a building area consisting of ten floors, a display area for POI information located on the fourth floor is equal to a height offset + a location moved upward by four floors from the origin P. In this case, the height offset is not a fixed value, and the height information of the building area in the driving image is changed based on the sensing data of the vehicle and is also varied with the height offset.

Also, in an embodiment, the AR digital signage corresponding to the content information is generated for each of the plurality of pieces of POI information and is mapped on a floor-by-floor basis in the received map information (2D or 3D map information or digital twin 3D map processed based on the map information). The digital signage platform 800 transmits the rendering request to the AR engine 830 and receives a rendering result from the AR engine 830 (1707).

When a result of the AR rendering request is received from the AR engine 830 (1707), the digital signage platform 800 transmits the result to the user terminal 200 (1708). Thus, the user terminal 200 maps an image of the AR digital signage corresponding to the received result of the AR rendering request to the display area of the building in the driving image acquired through the vision sensor and then outputs the mapped image on a floor-by-floor basis (1708). Thus, the AR digital signage is provided on a floor-by-floor in the building in the driving image. This overcomes the conventional limitation of providing one advertisement screen in one display area and provides an expansive effect of providing a plurality of different advertisement screens to corresponding floors of a building.

In an embodiment, a plurality of pieces of AR digital signage provided for the floors of the building may be vertically connected and mapped. For example, a plurality of pieces of AR digital signage mapped to the corresponding floors of the building may be mapped to surround at least one of the front side, the lateral side, and the rear side of the building, and AR rendering may be performed such that the upper and lower boundary lines of one piece of AR digital signage are connected to the lower and upper boundary lines of another piece of AR digital signage that is vertically connected and disposed. To this end, the display area of each piece of AR digital signage may be allocated to have the same height offset.

Also, in an embodiment, when a predetermined condition is satisfied, each piece of AR digital signage to be provided for a corresponding floor of the building may be integrated and mapped to display the expanded AR digital signage. Here, the predetermined condition may include a case in which POI information corresponding to the AR digital signage is set as a destination, a case in which user preference is high, a case in which a high service level is assigned by an advertisement provider, and the like. In this case, the AR digital signage may be mapped to be displayed across the plurality of floors of the building or on the entirety of the building.

Meanwhile, the AR engine 830 may be implemented so that the digital signage platform 800 is executed by a processor or may be implemented so that the digital signage platform 800 is executed by a processor of the user terminal 200 or a separate apparatus, server, system or cloud server.

In an embodiment, when the AR engine 830 is implemented to be executed through the processor of the user terminal 200, the AR rendering request may be performed for the user terminal 200. In this case, the digital signage platform 800 AR-merges the content information for each of the plurality of pieces of POI information and the display area in the driving image of the vehicle 100 matched to the display area determined based on the reference point and transmits relevant information directly to the user terminal 200. Then, the digital signage platform 800 may perform AR rendering through at least one processor on the basis of information regarding the AR merging and may map AR digital signage corresponding to the content information for each of the plurality of pieces of POI information to the display area in the driving image of the vehicle 100.

When the AR digital signage is mapped and output to the display area on a floor-by-floor basis as described above, the user terminal 200 transmits the output result to the digital signage platform 800 (1710). Then, the digital signage platform 800 may transmit an image correction request for the AR digital signage on the basis of the received output result and vehicle sensing data of the vehicle 100 (1711).

For example, when the driving speed or driving direction of the vehicle is changed, when a nearby obstacle is detected, or when the visibility of a building is changed, the digital signage platform 800 may collect such information or data and may generate and transmit a correction request to change the image of the current AR digital signage.

In an embodiment, a correction result corresponding to the image correction request may be rendered by the AR engine 830 and transmitted to the user terminal 200 or may be directly AR-rendered by the processor of the user terminal 200. The image correction request and corresponding AR rendering may be continuously performed.

Also, in an embodiment, the image correction request may include mapping an image of AR digital signage corresponding to different content information in the same display area. To this end, a plurality of pieces of content information corresponding to a plurality of pieces of AR digital signage to be displayed in a display area of at least one floor and a rotation order thereof may be defined in advance.

With the above-described digital signage platform providing apparatus, operating method thereof, and system including the same according to embodiments of the present invention, by mapping AR signage to a building in a driving image and displaying the AR signage to be closely similar to a real signboard, it is possible to solve the awkwardness caused by artificially displaying an AR object on a driving route screen in a conventional manner. Also, it is possible to solve the conventional limitation of displaying only one advertisement in one area even if AR technology is used, and thus advantageously, it is possible to provide extensibility for providing a plurality of various advertisements to one building. Also, by varying AR digital signage according to a varying driving image on the basis of driving-related sensing data of a vehicle and then performing mapping, it is possible to provide a realistic feeling as if a real signage signboard is installed in a building. In addition, by temporarily stopping the display of AR digital signage while a vehicle is performing a curve, it is possible to contribute to safe driving. Furthermore, by integrating a plurality of floors as necessary to provide more expanded AR digital signage, it is possible to maximize advertising effects and user interests.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the processor or the controller. Therefore, it should also be understood that the above-described embodiments are not limited by any of the details of the foregoing description, unless otherwise specified, but rather should be construed broadly within its scope as defined in the appended claims.

## Claims

1. A digital signage platform providing apparatus (800) comprising:
a communication module (810) configured to communicate with a user terminal (200) and a cloud server (900);
a memory (840); and
at least one processor communicatively connected to the memory and configured to execute at least one computer-readable program included in the memory,
wherein the at least one program comprises instructions of:
receiving sensing data of a vehicle (100) linked with the user terminal (200) and transmitting a request for map information associated with the cloud server (900) in response to a request received from the user terminal (200);
calculating spatial coordinates for a building area including a plurality of pieces of point of interest, POI, information and acquiring floor number information for each of the plurality of pieces of POI information on the basis of the map information received from the cloud server (900);
calculating a reference point of the building area for displaying content information related to the plurality of pieces of POI information on the basis of the received sensing data and the calculated spatial coordinates and the acquired floor number information for the building area;
performing a rendering request for displaying augmented reality, AR, digital signage corresponding to the content information in a display area determined based on the calculated reference point; and
transmitting a result of the rendering request to the user terminal (200) and allowing the user terminal (200) to map an image of the AR digital signage corresponding to the result of the rendering request to a display area of a building in a driving image acquired through a vision sensor of or near the vehicle (100) on a floor-by-floor basis, and
transmitting an image correction request to the user terminal (200), wherein the image correction request for the AR digital signage mapped to the display area is transmitted based on the reference point and the driving direction and speed of the vehicle (100), and
wherein when the driving direction of the vehicle (100) is toward the reference point, the image correction request is transmitted by the processor to dynamically adjust a shape change rate of the AR digital signage to the display area of the driving image varying in proportion to the driving speed of the vehicle (100).

2. The digital signage platform providing apparatus (800) according to claim 1, wherein the display areas of a plurality of the pieces of AR digital signage corresponding to the plurality of pieces of POI information are determined using the floor number information matched to the plurality of pieces of POI information and height information of the building area calculated based on the spatial coordinates for the building area.

3. The digital signage platform providing apparatus (800) according to claim 2, wherein the reference point is calculated by detecting reference coordinates of the building area in the driving image related to the driving direction and location of the vehicle (100).

4. The digital signage platform providing apparatus (800) according to claim 3, wherein at least one of a location and a shape of each of the determined display areas is corrected by the processor on the basis of a result of the comparison of the height information of each of the determined display areas and data included in the received map information.

5. The digital signage platform providing apparatus (800) according to claim 1, wherein when it is determined that the spatial coordinates for the building area cannot be acquired based on the received map information, the display area is determined by the processor using a floor number information and a height information of the building area estimated using camera sensing information included in the sensing data.

6. The digital signage platform providing apparatus (800) according to claim 5, wherein the reference point is calculated by detecting edges of the building area in the driving image and the driving direction of the vehicle (100).

7. The digital signage platform providing apparatus (800) according to claim 2, wherein
each of the determined display areas is matched to each display area corresponding to the building area of the driving image, and
the image correction request to map the image of the AR digital signage is transmitted by the processor such that each of the matched display areas are moved from the calculated reference point by the height of the floor number information.

8. The digital signage platform providing apparatus according to claim 1, wherein the image of the AR digital signage mapped to the display area of the driving image is formed to surround at least one side of the building area of the driving image.

9. The digital signage platform providing apparatus (800) according to claim 1, wherein the content information includes at least one of a brand icon, a 3D model, a still image, and a moving image, each related to the POI information.

10. A method (1100) for a digital signage platform, the method comprising operations of:
receiving (1110) sensing data of an interoperating vehicle (100) and transmitting a request for associated map information to a cloud server (900) in response to a request received from a user terminal (200);
calculating (1120) spatial coordinates for a building area including at least a plurality of pieces of point of interest, POI, information and acquiring floor number information for each of the plurality of pieces of POI information on the basis of the received map information;
calculating (1130) a reference point for displaying content information related to the plurality of pieces of POI information on the basis of the received sensing data and the calculated spatial coordinates and the acquired floor number information for the building area;
performing (1140) a rendering request to display augmented reality, AR, digital signage corresponding to the content information in a display area determined based on the calculated reference point;
transmitting (1150) a result of the rendering request to the user terminal (200) and transmitting an image correction request; and
wherein the user terminal (200) is mapping, on a floor-by-floor basis, an image of the AR digital signage corresponding to the result of the rendering request to a display area of a building in a driving image acquired through a vision sensor of or near the vehicle (100) and outputs the mapped image,
wherein the image correction request for the AR digital signage mapped to the display area is transmitted based on the reference point and the driving direction and speed of the vehicle (100), and
wherein when the driving direction of the vehicle (100) is toward the reference point, the image correction request is transmitted by the processor to dynamically adjust a shape change rate of the AR digital signage to the display area of the driving image varying in proportion to the driving speed of the vehicle (100).

11. The method (1100) according to claim 10, wherein the display areas of the plurality of pieces of AR digital signage corresponding to the plurality of pieces of POI information are determined using the floor number information matched to the plurality of pieces of POI information and a height information of the building area calculated based on the spatial coordinates for the building area.

12. The method (1100) according to claim 11, wherein
each of the determined display areas is matched to a corresponding display area in the building area of the driving image, and
the operation of transmitting the image correction request comprises an operation of transmitting an image correction request to map the image of the AR digital signage so that each of the matched display areas is moved from the calculated reference point by a height of the floor number information.

13. The method (1100) according to claim 10, wherein the operation of transmitting the image correction request comprises an operation of transmitting an image correction request for the AR digital signage mapped to the display area on the basis of the reference point and the driving direction and speed of the vehicle (100).

14. A digital signage providing system comprising:
a user terminal (200) linked with a vehicle (100); and
a digital signage platform providing apparatus (800) configured to communicate with the user terminal (200) and a cloud server (900),
wherein the digital signage platform providing apparatus (800) is an apparatus according to any one of claims 1 to 9.

## Patentansprüche

1. Vorrichtung (800) zum Bereitstellen einer Digital-Signage-Plattform, umfassend:
ein Kommunikationsmodul (810), das konfiguriert ist, mit einem Benutzerendgerät (200) und einem Cloud-Server (900) zu kommunizieren;
einen Speicher (840); und
mindestens einen Prozessor, der kommunikativ mit dem Speicher verbunden und konfiguriert ist, mindestens ein computerlesbares Programm auszuführen, das in dem Speicher enthalten ist,
wobei das mindestens eine Programm Anweisungen umfasst zum:
Empfangen von Sensordaten eines Fahrzeugs (100), das mit dem Benutzerendgerät (200) verknüpft ist, und Übertragen einer Anforderung von Karteninformationen, die mit dem Cloud-Server (900) verknüpft sind, als Reaktion auf eine von dem Benutzerendgerät (200) empfangene Anforderung;
Berechnen von Raumkoordinaten für einen Gebäudebereich, der eine Vielzahl von Einheiten von Point-of-Interest-, POI-, Informationen einschließt, und Erwerben von Stockwerksnummerinformationen für jede der Vielzahl von Einheiten von POI-Informationen auf Grundlage der von dem Cloud-Server (900) empfangenen Karteninformationen;
Berechnen eines Referenzpunkts des Gebäudebereichs zum Anzeigen von Inhaltsinformationen, die sich auf die Vielzahl von Einheiten von POl-Informationen beziehen, auf Grundlage der empfangenen Sensordaten und der berechneten Raumkoordinaten und der erworbenen Stockwerksnummerinformationen für den Gebäudebereich;
Durchführen einer Rendering-Anforderung zum Anzeigen von Augmented-Reality-, AR-, Digital-Signage, die den Inhaltsinformationen entspricht, in einem Anzeigebereich, der basierend auf dem berechneten Referenzpunkt bestimmt wird; und
Übertragen eines Ergebnisses der Rendering-Anforderung an das Benutzerendgerät (200) und Ermöglichen, dass das Benutzerendgerät (200) ein Bild der AR-Digital-Signage, das dem Ergebnis der Rendering-Anforderung entspricht, stockwerksweise einem Anzeigebereich eines Gebäudes in einem Fahrbild zuordnet, das durch einen Bildsensor des Fahrzeugs (100) oder nahe dem Fahrzeug (100) erfasst wird, und
Übertragen einer Bildkorrekturanforderung an das Benutzerendgerät (200), wobei die Bildkorrekturanforderung für die dem Anzeigebereich zugeordnete AR-Digital-Signage basierend auf dem Referenzpunkt und der Fahrtrichtung und Geschwindigkeit des Fahrzeugs (100) übertragen wird, und
wobei, wenn die Fahrtrichtung des Fahrzeugs (100) auf den Referenzpunkt gerichtet ist, die Bildkorrekturanforderung durch den Prozessor übertragen wird, um eine Formänderungsrate der AR-Digital-Signage an den Anzeigebereich des Fahrbildes dynamisch anzupassen, die proportional zur Fahrgeschwindigkeit des Fahrzeugs (100) variiert.

2. Vorrichtung (800) zum Bereitstellen einer Digital-Signage-Plattform nach Anspruch 1, wobei die Anzeigebereiche einer Vielzahl der Einheiten von AR-Digital-Signage, die der Vielzahl von Einheiten von POl-Informationen entsprechen, unter Verwendung der Stockwerksnummerinformationen, die mit der Vielzahl von Einheiten von POl-Informationen abgeglichen sind, und von Höheninformationen des Gebäudebereichs bestimmt werden, die basierend auf den Raumkoordinaten für den Gebäudebereich berechnet werden.

3. Vorrichtung (800) zum Bereitstellen einer Digital-Signage-Plattform nach Anspruch 2, wobei der Referenzpunkt durch Detektieren von Referenzkoordinaten des Gebäudebereichs in dem Fahrbild berechnet wird, die sich auf die Fahrtrichtung und den Standort des Fahrzeugs (100) beziehen.

4. Vorrichtung (800) zum Bereitstellen einer Digital-Signage-Plattform nach Anspruch 3, wobei mindestens eines von einem Standort und einer Form jedes der bestimmten Anzeigebereiche durch den Prozessor auf Grundlage eines Ergebnisses des Vergleichs der Höheninformationen jedes der bestimmten Anzeigebereiche und von Daten, die in den empfangenen Karteninformationen enthalten sind, korrigiert wird.

5. Vorrichtung (800) zum Bereitstellen einer Digital-Signage-Plattform nach Anspruch 1, wobei, wenn bestimmt wird, dass die Raumkoordinaten für den Gebäudebereich basierend auf den empfangenen Karteninformationen nicht erworben werden können, der Anzeigebereich durch den Prozessor unter Verwendung einer Stockwerksnummerinformation und einer Höheninformation des Gebäudebereichs bestimmt wird, die unter Verwendung von Kamerasensorinformationen geschätzt werden, die in den Sensordaten enthalten sind.

6. Vorrichtung (800) zum Bereitstellen einer Digital-Signage-Plattform nach Anspruch 5, wobei der Referenzpunkt durch Detektieren von Kanten des Gebäudebereichs in dem Fahrbild und der Fahrtrichtung des Fahrzeugs (100) berechnet wird.

7. Vorrichtung (800) zum Bereitstellen einer Digital-Signage-Plattform nach Anspruch 2, wobei
jeder der bestimmten Anzeigebereiche mit jedem Anzeigebereich abgeglichen wird, der dem Gebäudebereich des Fahrbildes entspricht, und
die Bildkorrekturanforderung zum Zuordnen des Bildes der AR-Digital-Signage durch den Prozessor so übertragen wird, dass jeder der abgeglichenen Anzeigebereiche von dem berechneten Referenzpunkt um die Höhe der Stockwerksnummerinformation bewegt wird.

8. Vorrichtung zum Bereitstellen einer Digital-Signage-Plattform nach Anspruch 1, wobei das Bild der AR-Digital-Signage, das dem Anzeigebereich des Fahrbildes zugeordnet ist, so gebildet ist, dass es mindestens eine Seite des Gebäudebereichs des Fahrbildes umgibt.

9. Vorrichtung (800) zum Bereitstellen einer Digital-Signage-Plattform nach Anspruch 1, wobei die Inhaltsinformationen mindestens eines von einem Markensymbol, einem 3D-Modell, einem Standbild und einem Bewegtbild einschließen, die jeweils mit den POl-Informationen in Beziehung stehen.

10. Verfahren (1100) für eine Digital-Signage-Plattform, wobei das Verfahren Vorgänge umfasst zum:
Empfangen (1110) von Sensordaten eines interoperierenden Fahrzeugs (100) und Übertragen einer Anforderung zugehöriger Karteninformationen an einen Cloud-Server (900) als Reaktion auf eine von einem Benutzerendgerät (200) empfangene Anforderung;
Berechnen (1120) von Raumkoordinaten für einen Gebäudebereich, der mindestens eine Vielzahl von Einheiten von Point-of-Interest-, POI-, Informationen einschließt, und Erwerben von Stockwerksnummerinformationen für jede der Vielzahl von Einheiten von POl-Informationen auf Grundlage der empfangenen Karteninformationen;
Berechnen (1130) eines Referenzpunkts zum Anzeigen von Inhaltsinformationen, die sich auf die Vielzahl von Einheiten von POl-Informationen beziehen, auf Grundlage der empfangenen Sensordaten und der berechneten Raumkoordinaten und der erworbenen Stockwerksnummerinformationen für den Gebäudebereich;
Durchführen (1140) einer Rendering-Anforderung zum Anzeigen von Augmented-Reality-, AR-, Digital-Signage, die den Inhaltsinformationen entspricht, in einem Anzeigebereich, der basierend auf dem berechneten Referenzpunkt bestimmt wird;
Übertragen (1150) eines Ergebnisses der Rendering-Anforderung an das Benutzerendgerät (200) und Übertragen einer Bildkorrekturanforderung; und
wobei das Benutzerendgerät (200) stockwerksweise ein Bild der AR-Digital-Signage, das dem Ergebnis der Rendering-Anforderung entspricht, einem Anzeigebereich eines Gebäudes in einem Fahrbild zuordnet, das durch einen Bildsensor des Fahrzeugs (100) oder nahe dem Fahrzeug (100) erfasst wird, und das zugeordnete Bild ausgibt,
wobei die Bildkorrekturanforderung für die dem Anzeigebereich zugeordnete AR-Digital-Signage basierend auf dem Referenzpunkt und der Fahrtrichtung und Geschwindigkeit des Fahrzeugs (100) übertragen wird, und
wobei, wenn die Fahrtrichtung des Fahrzeugs (100) auf den Referenzpunkt gerichtet ist, die Bildkorrekturanforderung durch den Prozessor übertragen wird, um eine Formänderungsrate der AR-Digital-Signage an den Anzeigebereich des Fahrbildes dynamisch anzupassen, die proportional zur Fahrgeschwindigkeit des Fahrzeugs (100) variiert.

11. Verfahren (1100) nach Anspruch 10, wobei die Anzeigebereiche der Vielzahl von Einheiten von AR-Digital-Signage, die der Vielzahl von Einheiten von POI-Informationen entsprechen, unter Verwendung der Stockwerksnummerinformationen, die mit der Vielzahl von Einheiten von POl-Informationen abgeglichen sind, und einer Höheninformation des Gebäudebereichs bestimmt werden, die basierend auf den Raumkoordinaten für den Gebäudebereich berechnet wird.

12. Verfahren (1100) nach Anspruch 11, wobei
jeder der bestimmten Anzeigebereiche mit einem entsprechenden Anzeigebereich in dem Gebäudebereich des Fahrbildes abgeglichen wird, und
der Vorgang des Übertragens der Bildkorrekturanforderung einen Vorgang des Übertragens einer Bildkorrekturanforderung zum Zuordnen des Bildes der AR-Digital-Signage umfasst, sodass jeder der abgeglichenen Anzeigebereiche von dem berechneten Referenzpunkt um eine Höhe der Stockwerksnummerinformation bewegt wird.

13. Verfahren (1100) nach Anspruch 10, wobei der Vorgang des Übertragens der Bildkorrekturanforderung einen Vorgang des Übertragens einer Bildkorrekturanforderung für die dem Anzeigebereich zugeordnete AR-Digital-Signage auf Grundlage des Referenzpunkts und der Fahrtrichtung und Geschwindigkeit des Fahrzeugs (100) umfasst.

14. Digital-Signage-Bereitstellungssystem, umfassend:
ein Benutzerendgerät (200), das mit einem Fahrzeug (100) verknüpft ist; und
eine Vorrichtung (800) zum Bereitstellen einer Digital-Signage-Plattform, die konfiguriert ist, mit dem Benutzerendgerät (200) und einem Cloud-Server (900) zu kommunizieren,
wobei die Vorrichtung (800) zum Bereitstellen einer Digital-Signage-Plattform eine Vorrichtung nach einem der Ansprüche 1 bis 9 ist.

## Revendications

1. Appareil (800) de fourniture d'une plateforme de signalétique numérique, comprenant :
un module de communication (810) configuré pour communiquer avec un terminal utilisateur (200) et un serveur cloud (900) ;
une mémoire (840) ; et
au moins un processeur connecté de manière communicative à la mémoire et configuré pour exécuter au moins un programme lisible par ordinateur inclus dans la mémoire,
dans lequel ledit au moins un programme comprend des instructions consistant à :
recevoir des données de détection d'un véhicule (100) lié au terminal utilisateur (200) et transmettre une requête d'informations cartographiques associées au serveur cloud (900) en réponse à une requête reçue du terminal utilisateur (200) ;
calculer des coordonnées spatiales pour une zone de bâtiment incluant une pluralité d'éléments d'informations de point d'intérêt, POI, et acquérir des informations de numéro d'étage pour chacun de la pluralité d'éléments d'informations de POI sur la base des informations cartographiques reçues du serveur cloud (900) ;
calculer un point de référence de la zone de bâtiment pour afficher des informations de contenu relatives à la pluralité d'éléments d'informations de POI sur la base des données de détection reçues et des coordonnées spatiales calculées et des informations de numéro d'étage acquises pour la zone de bâtiment ;
effectuer une requête de rendu pour afficher une signalétique numérique en réalité augmentée, AR, correspondant aux informations de contenu dans une zone d'affichage déterminée sur la base du point de référence calculé ; et
transmettre un résultat de la requête de rendu au terminal utilisateur (200) et permettre au terminal utilisateur (200) d'associer, étage par étage, une image de la signalétique numérique AR correspondant au résultat de la requête de rendu à une zone d'affichage d'un bâtiment dans une image de conduite acquise par l'intermédiaire d'un capteur de vision du véhicule (100) ou proche du véhicule (100), et
transmettre une requête de correction d'image au terminal utilisateur (200), dans lequel la requête de correction d'image pour la signalétique numérique AR associée à la zone d'affichage est transmise sur la base du point de référence et de la direction de conduite et de la vitesse du véhicule (100), et
dans lequel, lorsque la direction de conduite du véhicule (100) est orientée vers le point de référence, la requête de correction d'image est transmise par le processeur afin d'ajuster dynamiquement un taux de changement de forme de la signalétique numérique AR à la zone d'affichage de l'image de conduite variant proportionnellement à la vitesse de conduite du véhicule (100).

2. Appareil (800) de fourniture d'une plateforme de signalétique numérique selon la revendication 1, dans lequel les zones d'affichage d'une pluralité des éléments de signalétique numérique AR correspondant à la pluralité d'éléments d'informations de POI sont déterminées en utilisant les informations de numéro d'étage mises en correspondance avec la pluralité d'éléments d'informations de POI et des informations de hauteur de la zone de bâtiment calculées sur la base des coordonnées spatiales pour la zone de bâtiment.

3. Appareil (800) de fourniture d'une plateforme de signalétique numérique selon la revendication 2, dans lequel le point de référence est calculé en détectant des coordonnées de référence de la zone de bâtiment dans l'image de conduite relatives à la direction de conduite et à l'emplacement du véhicule (100).

4. Appareil (800) de fourniture d'une plateforme de signalétique numérique selon la revendication 3, dans lequel au moins l'un d'un emplacement et d'une forme de chacune des zones d'affichage déterminées est corrigé par le processeur sur la base d'un résultat de la comparaison des informations de hauteur de chacune des zones d'affichage déterminées et de données incluses dans les informations cartographiques reçues.

5. Appareil (800) de fourniture d'une plateforme de signalétique numérique selon la revendication 1, dans lequel, lorsqu'il est déterminé que les coordonnées spatiales pour la zone de bâtiment ne peuvent pas être acquises sur la base des informations cartographiques reçues, la zone d'affichage est déterminée par le processeur en utilisant une information de numéro d'étage et une information de hauteur de la zone de bâtiment estimées en utilisant des informations de détection de caméra incluses dans les données de détection.

6. Appareil (800) de fourniture d'une plateforme de signalétique numérique selon la revendication 5, dans lequel le point de référence est calculé en détectant des bords de la zone de bâtiment dans l'image de conduite et la direction de conduite du véhicule (100).

7. Appareil (800) de fourniture d'une plateforme de signalétique numérique selon la revendication 2, dans lequel
chacune des zones d'affichage déterminées est mise en correspondance avec chaque zone d'affichage correspondant à la zone de bâtiment de l'image de conduite, et
la requête de correction d'image destinée à associer l'image de la signalétique numérique AR est transmise par le processeur de telle sorte que chacune des zones d'affichage mises en correspondance soit déplacée depuis le point de référence calculé de la hauteur de l'information de numéro d'étage.

8. Appareil de fourniture d'une plateforme de signalétique numérique selon la revendication 1, dans lequel l'image de la signalétique numérique AR associée à la zone d'affichage de l'image de conduite est formée pour entourer au moins un côté de la zone de bâtiment de l'image de conduite.

9. Appareil (800) de fourniture d'une plateforme de signalétique numérique selon la revendication 1, dans lequel les informations de contenu incluent au moins l'un d'une icône de marque, d'un modèle 3D, d'une image fixe et d'une image animée, chacun étant relatif aux informations de POI.

10. Procédé (1100) pour une plateforme de signalétique numérique, le procédé comprenant des opérations consistant à :
recevoir (1110) des données de détection d'un véhicule interopérant (100) et transmettre une requête d'informations cartographiques associées à un serveur cloud (900) en réponse à une requête reçue d'un terminal utilisateur (200) ;
calculer (1120) des coordonnées spatiales pour une zone de bâtiment incluant au moins une pluralité d'éléments d'informations de point d'intérêt, POI, et acquérir des informations de numéro d'étage pour chacun de la pluralité d'éléments d'informations de POI sur la base des informations cartographiques reçues ;
calculer (1130) un point de référence pour afficher des informations de contenu relatives à la pluralité d'éléments d'informations de POI sur la base des données de détection reçues et des coordonnées spatiales calculées et des informations de numéro d'étage acquises pour la zone de bâtiment ;
effectuer (1140) une requête de rendu pour afficher une signalétique numérique en réalité augmentée, AR, correspondant aux informations de contenu dans une zone d'affichage déterminée sur la base du point de référence calculé ;
transmettre (1150) un résultat de la requête de rendu au terminal utilisateur (200) et transmettre une requête de correction d'image ; et
dans lequel le terminal utilisateur (200) associe, étage par étage, une image de la signalétique numérique AR correspondant au résultat de la requête de rendu à une zone d'affichage d'un bâtiment dans une image de conduite acquise par l'intermédiaire d'un capteur de vision du véhicule (100) ou proche du véhicule (100) et délivre l'image associée,
dans lequel la requête de correction d'image pour la signalétique numérique AR associée à la zone d'affichage est transmise sur la base du point de référence et de la direction de conduite et de la vitesse du véhicule (100), et
dans lequel, lorsque la direction de conduite du véhicule (100) est orientée vers le point de référence, la requête de correction d'image est transmise par le processeur afin d'ajuster dynamiquement un taux de changement de forme de la signalétique numérique AR à la zone d'affichage de l'image de conduite variant proportionnellement à la vitesse de conduite du véhicule (100).

11. Procédé (1100) selon la revendication 10, dans lequel les zones d'affichage de la pluralité d'éléments de signalétique numérique AR correspondant à la pluralité d'éléments d'informations de POI sont déterminées en utilisant les informations de numéro d'étage mises en correspondance avec la pluralité d'éléments d'informations de POI et une information de hauteur de la zone de bâtiment calculée sur la base des coordonnées spatiales pour la zone de bâtiment.

12. Procédé (1100) selon la revendication 11, dans lequel
chacune des zones d'affichage déterminées est mise en correspondance avec une zone d'affichage correspondante dans la zone de bâtiment de l'image de conduite, et
l'opération de transmission de la requête de correction d'image comprend une opération de transmission d'une requête de correction d'image destinée à associer l'image de la signalétique numérique AR de sorte que chacune des zones d'affichage mises en correspondance soit déplacée depuis le point de référence calculé d'une hauteur de l'information de numéro d'étage.

13. Procédé (1100) selon la revendication 10, dans lequel l'opération de transmission de la requête de correction d'image comprend une opération de transmission d'une requête de correction d'image pour la signalétique numérique AR associée à la zone d'affichage sur la base du point de référence et de la direction de conduite et de la vitesse du véhicule (100).

14. Système de fourniture de signalétique numérique comprenant :
un terminal utilisateur (200) lié à un véhicule (100) ; et
un appareil (800) de fourniture d'une plateforme de signalétique numérique configuré pour communiquer avec le terminal utilisateur (200) et un serveur cloud (900),
dans lequel l'appareil (800) de fourniture d'une plateforme de signalétique numérique est un appareil selon l'une quelconque des revendications 1 à 9.
